(19) Europäisches Patentamt
European Patent Office
Office européen des brevets

(11) **EP 3 326 806 B1**

(12) **EUROPEAN PATENT SPECIFICATION**

(45) Date of publication and mention
of the grant of the patent:
**04.12.2019 Bulletin 2019/49**

(21) Application number: **15898968.1**

(22) Date of filing: **24.09.2015**

(51) Int Cl.:
**B32B 9/00** *(2006.01)*     **B32B 5/18** *(2006.01)*
**C09D 5/16** *(2006.01)*     **C09D 7/63** *(2018.01)*
**C09D 7/65** *(2018.01)*

(86) International application number:
**PCT/JP2015/076962**

(87) International publication number:
**WO 2017/013810 (26.01.2017 Gazette 2017/04)**

(54) **ANTIFOULING STRUCTURE AND METHOD FOR PRODUCING SAME**

BEWUCHSHEMMENDE STRUKTUR UND VERFAHREN ZUR HERSTELLUNG DAVON

STRUCTURE ANTISALISSURE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.07.2015 JP 2015143017**

(43) Date of publication of application:
**30.05.2018 Bulletin 2018/22**

(73) Proprietor: **Nissan Motor Co., Ltd.**
**Yokohama-shi, Kanagawa 221-0023 (JP)**

(72) Inventors:
• **NOGUCHI, Yuji**
**Yokohama-shi**
**Kanagawa 221-0023 (JP)**
• **KAI, Yasuaki**
**Yokohama-shi**
**Kanagawa 221-0023 (JP)**

• **KOBAYASHI, Ryota**
**Yokohama-shi**
**Kanagawa 221-0023 (JP)**
• **MURAKAMI, Ryou**
**Yokohama-shi**
**Kanagawa 221-0023 (JP)**

(74) Representative: **Hoefer & Partner Patentanwälte
mbB**
**Pilgersheimer Straße 20**
**81543 München (DE)**

(56) References cited:
**WO-A1-2008/120505      WO-A1-2009/066630**
**WO-A1-2015/155830      WO-A2-2012/100100**
**JP-A- 2004 038 075      JP-A- 2005 112 911**
**JP-A- 2010 174 079      JP-A- 2014 079 920**

**Description**

TECHNICAL FIELD

The present invention relates to an antifouling structure and a method for producing the same. In more detail, the present invention relates to an antifouling structure with high heat resistance, a method for producing the antifouling structure, an automobile part with the antifouling structure and a precursor of the antifouling structure.

BACKGROUND ART

An article with a slippery surface that can repel foreign objects has been proposed (see Patent Document 1). The article, which has a water-repellant surface, includes a base with a course surface and lubricating liquid that moistens and attaches to the course surface to form a stabilized liquid coating, in which the liquid covers the course surface to a thickness sufficient to form a liquid top surface above the course surface. The course surface and the lubricating liquid have affinity for each other that the lubricating liquid is substantially fixed on the base to form the water-repellant surface.

CITATION LIST

Patent Document

Patent Document 1: JP 2014-509959A

SUMMARY OF INVENTION

Technical Problem

However, a problem with the article described in Patent Document 1 is that insufficient retention of fluorinated oil is likely to cause loss of the fluorinated oil when the article experiences an exposure to high temperature or the like.
The present invention has been made in view of the problem with the prior art. It is an object of the present invention to provide an antifouling structure with high heat resistance, a method for producing the antifouling structure, an automobile part with the antifouling structure and a precursor of the antifouling structure.

Solution to Problem

The present inventors conducted a keen study for achieving the above-described object. As a result, they found that the above-described object can be achieved by an antifouling structure that includes: a surface layer that is formed on a base and includes a microporous structure; and a fluorine-containing liquid retained in the micropores of the microporous structure, wherein elemental fluorine is present at least in a surface portion of the surface layer. The present invention was thus completed.
That is, the antifouling structure of the present invention includes: a base; a structure that is formed on the surface of the base and includes a microporous structure with micropores; and a fluorine-containing liquid retained in the micropores of the microporous structure. Further, elemental fluorine is present in the surface of the microporous structure. Further, the average diameter of surface openings of the micropores in the microporous structure is equal to or greater than 10 nm.
In a preferred embodiment, the antifouling structure of the present invention includes: a base; a structure that is formed on the surface of the base and includes a microporous structure with micropores; and a fluorine-containing liquid retained in the micropores of the microporous structure. Further, elemental fluorine is present in the surface of the microporous structure. Further, the average diameter of surface openings of the micropores in the microporous structure is equal to or greater than 10 nm. The elemental fluorine is present in the surface of the microporous structure in the area from the surface of the structure to a depth of at least T/2, where T is the thickness of the structure.
In the production of the antifouling structure according to the present invention, the method for producing the antifouling structure of the present invention includes: forming the structure on the surface of the base, in which the structure includes the microporous structure with the micropores having an average diameter of the surface openings of 10 nm or more, and the elemental fluorine is present in the surface of the microporous structure, wherein the forming step comprises: applying an application liquid containing a polymerizable organometallic compound, an organometallic compound having a fluorine functional group and an acid or basic catalyst to the base; then heating the base at 20°C to 200°C to precure the application liquid; and thereafter heating the base at 300°C to 500°C.
The automobile part of the present invention includes the antifouling structure of the present invention.

The precursor of the antifouling structure of the present invention includes: a base; a structure that is formed on the surface of the base and includes a microporous structure with micropores. Further, elemental fluorine is present in the surface of the microporous structure. Further, the average diameter of surface openings of the micropores in the microporous structure is equal to or greater than 10 nm.

Advantageous Effects of Invention

According to the present invention, an antifouling structure includes: a base; a structure that is formed on the surface of the base and includes a microporous structure with micropores; and a fluorine-containing liquid retained in the micropores of the microporous structure, wherein elemental fluorine is present in the surface of the microporous structure, and the average diameter of surface openings of the micropores in the microporous structure is equal to or greater than 10 nm. This enables providing an antifouling structure with high heat resistance, a method for producing the antifouling structure, an automobile part with the antifouling structure and a precursor of the antifouling structure.

BRIEF DESCRIPTION OF DRAWINGS

FIG. 1 is a perspective view of the outer appearance of an antifouling structure according to a first embodiment of the present invention, in which a base is removed, and a surface layer includes a microporous structure with micropores that are randomly disposed in three-dimensional directions of the surface layer and that are communicated with each other.
FIG. 2 is a schematic cross-sectional view of the antifouling structure of FIG. 1 taken along the line II-II.
FIG. 3 is a perspective view of the outer appearance of an antifouling structure according to a second embodiment of the present invention, in which a base is removed, and a surface layer includes a microporous structure with micropores that are composed of cylindrical recesses dispersed in the surface of the surface layer.
FIG. 4 is a schematic cross-sectional view of the antifouling structure of FIG. 3 taken along the line IV-IV.
FIG. 5 is a schematic cross-sectional view of an antifouling structure according to a fourth embodiment of the present invention.
FIG. 6 is a cross-sectional view schematically illustrating the Cassie state.
FIG. 7 is a schematic cross-sectional view of an antifouling structure according to a fifth embodiment of the present invention.
FIG. 8 is an explanatory view of an example of a method for producing an antifouling structure according to a sixth embodiment of the present invention.
FIG. 9 is an explanatory view of another example of the method for producing the antifouling structure according to the sixth embodiment of the present invention.

DESCRIPTION OF EMBODIMENTS

Hereinafter, an antifouling structure, a method for producing the antifouling structure, an automobile part and a precursor of the antifouling structure according to an embodiment of the present invention will be described in detail.

FIRST EMBODIMENT

An antifouling structure according to a first embodiment of the present invention will be described in detail referring to the drawings. The dimension of the drawings referred to in the following embodiments are exaggerated for descriptive reasons and is sometimes different from the actual dimension.

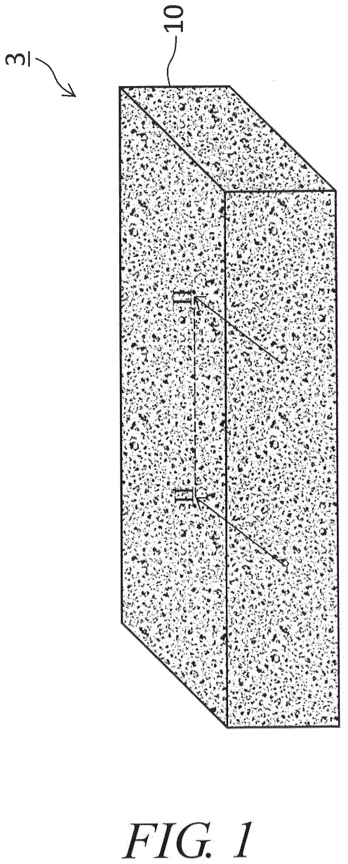

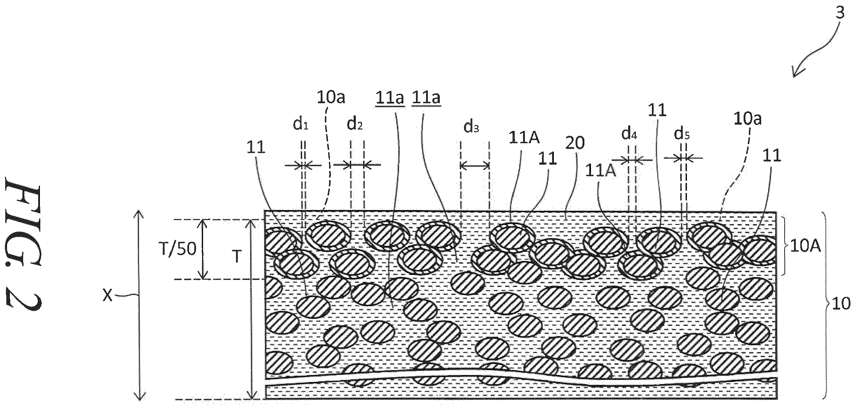

FIG. 1 is a perspective view of the outer appearance of the antifouling structure according to the first embodiment of the present invention, in which a base is removed, and a surface layer includes a microporous structure with micropores that are randomly disposed in three-dimensional directions of the surface layer and that are communicated with each other. FIG. 2 is a schematic cross-sectional view of the antifouling structure of FIG. 1 taken along the line II-II. As illustrated in FIG. 1 and FIG. 2, the antifouling structure 3 according to the embodiment includes a surface layer 10 that is composed of a microporous structure 11 with fine micropores 11a and a fluorine-containing liquid 20 that is retained in the micropores 11a of the microporous structure 11 and covers the surface 10a of the surface layer 10. Further, elemental fluorine (not shown) is present at least in a surface portion 10A of the surface layer 10.
As used herein, "a surface portion of a surface layer" refers to a portion that is composed of at least a part of the outermost surface of the surface layer and the inner surface of at least a part of the micropores in the surface layer.
As illustrated in FIG. 2, it is preferred that elemental fluorine (not shown), which is, for example, derived from an alkoxy oligomer having a fluorine functional group, is present in the surface portion 11A of the microporous structure 11 in the area from the surface 10a of the surface layer 10 to a depth of T/50 (T being the thickness of the surface layer). However, the presence of elemental fluorine is not particularly limited to the above embodiment. That is, the presence of elemental fluorine in the surface portion of the surface layer can be achieved, for example, by modifying the microporous structure with a fluorine-based surface modifier known in the art such as an alkoxy oligomer having a fluorine functional group. However, the method is not particularly limited.

As used herein, "a surface portion of a microporous structure" refers to the surface of the microporous structure that is disposed in the surface and the inside of the surface layer.

Further, as used herein, the elemental fluorine (not shown) present in a surface portion of a surface layer is not derived from a fluorine-containing liquid of an antifouling structure as described above but from a monomolecular membrane that is introduced in a production step before the fluorine-containing liquid is retained, which is described later in detail. For example, the elemental fluorine present in the surface portion can be detected by an elemental analysis (target elements: carbon, oxygen, fluorine and silicon) based on X-ray photoemission spectroscopy (XPS). Specifically, the elemental fluorine concentration distribution in the layer thickness (depth) direction can be determined by performing an elemental analysis (target elements: carbon, oxygen, fluorine and silicon) based on X-ray photoemission spectroscopy (XPS) while etching the surface layer with argon gas. For example, when the elemental fluorine concentration is equal to or more than 3 mol% at a certain location in the layer thickness (depth) direction, it can be said that elemental fluorine derived from the monomolecular membrane is present at the location. However, the definition is not particularly limited thereto.

To confirm that the fluorine functional group such as a fluoroalkyl group, which is derived from the fluorine-based surface modifier used in forming the monomolecular membrane, is bonded to the microporous structure in the surface portion of the surface layer, for example, time-of-flight secondary ion mass spectroscopy can be used.

As described above, the presence of elemental fluorine at least in the surface portion of the surface layer can improve the retention of the fluorine-containing liquid in the antifouling structure. This can improve the function of preventing loss of the fluorine-containing liquid in the antifouling structure due to an exposure to high temperature, i.e. improve the heat resistance. Furthermore, this can also prolong the antifouling effect accordingly. As a result, excellent durability is imparted to the antifouling structure.

The components will be individually described in more detail.

The surface layer 10 is not particularly limited and may be any layer that includes the microporous structure with fine micropores. For example, it is preferred that the surface layer includes the microporous structure with micropores that are randomly disposed in the three-dimensional directions of the surface layer and are communicated with each other as illustrated in FIG. 2. In addition to the surface layer including such microporous structure, for example, it is also preferred that the surface layer includes the microporous structure with micropores that are formed in the layer thickness (depth) direction of the surface layer (illustrated by the arrow X in FIG. 2) and are not communicated with each other in the direction perpendicular to the layer thickness (depth) direction, which is described later in detail. To be more specific, it is preferred that the surface layer includes the microporous structure with micropores that are composed of cylindrical recesses dispersed in the surface of the surface layer.

In an embodiment of an antifouling structure of the present invention, it is preferred that elemental fluorine is present in the surface portion of the microporous structure in the area from the surface of the surface layer to at least a depth of T/50 (T being the thickness of the surface layer). It is more preferred that elemental fluorine is present in the surface portion of the microporous structure in the area from the surface of the surface layer to at least a depth of T/5. This allows the fluorine-containing liquid to spread to moist the entire surface of the surface layer so as to improve the retention capacity of the fluorine-containing liquid in the antifouling structure. Furthermore, this can also prolong the antifouling effect accordingly. As a result, excellent durability is imparted to the antifouling structure. However, it should be understood well that the surface portion is not limited to these ranges and may be out of these ranges as long as the functions and effects of the present invention are achieved.

In the embodiment, the thickness T of the surface layer is preferably equal to or greater than 50 nm, more preferably equal to or greater than 100 nm, still more preferably equal to or greater than 200 nm in terms of ease of forming the micropores and the retention of the fluorine-containing liquid. Further, in the embodiment, the thickness T of the surface layer is preferably equal to or less than 8000 nm, more preferably equal to or less than 3000 nm, still more preferably equal to or less than 1000 nm, particularly equal to or less than 300 nm in terms of the anti-cracking property of the membrane and reduction of the haze value. Further, in the embodiment, the thickness T of the surface layer ranges preferably from 50 nm to 1000 nm in terms of ease of forming the micropores, the retention of the fluorine-containing liquid, the anti-cracking property of the membrane and reduction of the haze value. However, it should be understood well that the thickness T is not limited to these ranges at all, and may be out of these ranges as long as the functions and effects of the present invention can be achieved. The thickness T of the surface layer can be adjusted, for example, by changing the dilution ratio, the coating speed and the like of the raw materials of the microporous structure to be applied to the base.

In the embodiment, the average diameter D of the surface openings of the microporous structure is preferably equal to or greater than 10 nm, more preferably equal to or greater than 20 nm in terms of retention of the fluorine-containing liquid. When the average diameter of the surface openings of the microporous structure is less than 10 nm, a fluorine-based surface modifier having a size of, for example, approximately 7 nm cannot penetrate into the surface layer. It is sometimes difficult for such microporous structures to retain fluorine-containing liquid such as fluorinated oil. Further, in the embodiment, the average diameter D of the surface openings of the microporous structure is preferably equal to or less than 1000 nm, more preferably equal to or less than 500 nm, still preferably equal to or less than 100 nm in terms of the anti-cracking property of the membrane and reduction of the haze value, reduction of light scattering caused by Rayleigh scattering. Further, the average diameter D of the surface openings of the microporous structure preferably ranges from 10 to 100 nm in terms of retention of the fluorine-containing liquid, the anti-cracking property of the membrane, reduction of the haze value and reduction of light scattering caused by Rayleigh scattering. However, it should be understood well that the thickness T is not limited to these ranges at all, and may be out of these ranges as long as the functions and effects of the present invention can be achieved. The average diameter D of the surface openings of the microporous structure can be adjusted, for example, by changing the time of producing the microporous structure, specifically the time immediately after the raw materials of the microporous structure are applied to the base until it is dried by heat. Specifically, the average diameter D of the surface openings of the microporous structure can be increased by extending the time immediately after the application until completion of the drying by heat.

As used herein, "the average diameter D of the surface openings of a microporous structure" may refer to, for example, the average of the diameters (e.g. denoted as $d_1$ to $d_5$ in FIG. 2) of circles having the same areas as the respective surface openings observed from above of the antifouling structure by scanning electron microscopy (SEM), which is calculated by image analysis.

In the embodiment, it is preferred that the thickness T of the surface layer ranges from 100 nm to 1000 nm and the average diameter D of the surface openings of the microporous structure ranges from 10 nm to 100 nm in terms of ease of forming the micropores, retention of the fluorine-containing liquid, the anti-cracking property of the membrane, reduction of the haze value and reduction of light scattering cause by Rayleigh scattering. It is still more preferred that the thickness T of the surface layer ranges from 100 nm to 300 nm and the average diameter D of the surface openings of the microporous structure ranges from 10 nm to 100 nm. It is particularly preferred that the thickness T of the surface layer ranges from 200 nm to 300 nm and the average diameter D of the surface openings of the microporous structure ranges from 20 nm to 100 nm. However, it should be understood well that they are not limited to these ranges and may be out of these ranges as long as the functions and effects of the present invention can be achieved.

With regard to the material, the microporous structure is preferably made of an inorganic material in terms of improving the sliding resistance and the durability of the antifouling structure. However, the material is not particularly limited. Examples of inorganic materials that can be used include simple oxides such as silicon oxide, aluminum oxide, magnesium oxide, titanium oxide, cerium oxide, niobium oxide, zirconium oxide, indium oxide, tin oxide, zinc oxide and hafnium oxide, complex oxides such as barium titanate, glass and the like. The material is however not limited thereto. For example, non-oxides such as silicon nitride and magnesium fluoride can also be used. They may be used alone or in combination of two or more. Among them, silicon oxide, aluminum oxide, titanium oxide, indium oxide, tin oxide, zirconium oxide and the like are preferred in terms of high light transmittance. It is more preferred to contain silicon oxide in the amount of 90 mass% or more, and it is particularly preferred to contain silicon oxide in the amount of 100 mass%.

The surface roughness Ra of the surface layer is not particularly limited but ranges preferably from 1 nm to 100 nm, more preferably from 1 nm to 50 nm, and still more preferably from 1 nm to 10 nm. This is because the surface layer with micro-level surface roughness may deteriorate the antifouling performance due to the influence of surface roughness of the surface layer. However, the surface roughness is not limited to these ranges and may be out of these ranges as long as the functions and effects of the present invention can be achieved. For example, the surface roughness of the surface layer can be measured by atomic force microscopy (AFM).

It is preferred that the antifouling structure has an all-optical transmittance of 70% or more and a haze value of 1% or less. When the all-optical transmittance is equal to or greater than 70% and the haze value is equal to or less than 1%, high transparency can be ensured. When the all-optical transmittance is equal to or greater than 90%, the antifouling structure is also applicable to articles that require very strict transparency such as glass for automobile parts and optical components. The highest possible all-optical transmittance is currently 95%. The haze value is required to be equal to or less than 1% for automobile parts. The haze value ranges preferably from 0.1% to 1%, more preferably from 0.1% to 0.8%. However, it should be understood well that the all-optical transmittance and the haze value are not limited to these ranges and may be out of these ranges as long as the functions and effects of the present invention can be achieved.

In the embodiment, the surface energy of the surface portion of the microporous structure is preferably equal to or less than 20 mN/m, more preferably from 10 mN/m to 20 mN/m. In the embodiment, as the antifouling structure includes such microporous structure, the affinity between the fluorine-containing liquid and the microporous structure is improved and thus the fluorine-containing liquid spreads to moist over the entire surface. This can remarkably improve the retention of the fluorine-containing liquid in the antifouling structure. Furthermore, this can also prolong the antifouling effect accordingly. As a result, excellent durability is imparted to the antifouling structure.

The fluorine-containing liquid 20 is not particularly limited and may be any compound that has a fluorine-based main or side chain. Examples of such liquids include fluorinated oils such as fluoroether- and fluoroalkyl-based oils. It is preferred to use fluorinated oils having a perfluoropolyether main chain in terms of the retention and the affinity. KRYTOX (registered trademark) (perfluoropolyether-based, Dupont Co.) has low vapor pressure (0.01 Pa or less) and low volatility, and is likely to exhibit good retention.

Other examples are FLUORINERT (perfluoroalkyl-based, 3M Co.) and NOVEC (perfluoropolyether-based, 3M Co.), DEMNUM (perfluoroalkyl-based, DAIKIN INDUSTRIES, Ltd.) and the like. However, they have high volatility and are preferably applied to short-term usages. To adjust the viscosity or the vapor pressure of these fluorinated oils, an elemental halogen other than fluorine or a functional group having a halogen other than fluorine may be added to a side chain.

The evaporation loss of the fluorine-containing liquid after retention at 121°C for 22 hours, which is measured according to ASTM D972 as in the performance evaluation of KRYTOX (registered trademark) made by Dupont Co., is preferably less than 35 mass%. In the embodiment, as including such fluorine-containing liquid, the antifouling structure has excellent durability. For example, even in an automobile application, the fluorine-containing liquid is less likely to spontaneously evaporate to cause deterioration of the performance, and the antifouling effect can last for a long time around ambient temperature (from 5°C to 35°C). However, it should be understood well that the evaporation loss is not limited to these ranges and may be out of these ranges as long as the functions and effects of the present invention can be achieved.

The viscosity of the fluorine-containing liquid at 0°C is preferably equal to or less than 160 $mm^2/s$, more preferably from 3 $mm^2/s$ to 100 $mm^2/s$, still more preferably from 8 $mm^2/s$ to 80 $mm^2/s$. In the embodiment, as including such fluorine-containing liquid, the antifouling structure has good water droplets sliding characteristic. As a result, the fouling sliding characteristic can be maintained accordingly. However, it should be understood well that the viscosity is not limited to these ranges and may be out of these ranges as long as the functions and effects of the present invention can be achieved.

A base (not shown) may be provided on the opposite side of the surface layer from the front side. Examples of materials that can be used for the base include simple oxides such as silicon oxide, aluminum oxide, magnesium oxide, titanium oxide, cerium oxide, niobium oxide, zirconium oxide, indium oxide, hafnium oxide, complex oxides such as barium titanate, glass and the like. However, the base is not limited to these materials. For example, non-oxides such as silicon nitride and magnesium fluoride can also be used. Further, the base is not limited to these inorganic materials. For example, organic materials that can be used include non-cross-linked acrylic resins, cross-linked acrylic resins, cross-linked acrylic-urethane copolymers, cross-linked acrylic-elastomer copolymers, silicone elastomers, polyethylene, polypropylene, cross-linked polyvinyl alcohol, polyvinylidene chloride, polyethylene terephthalate, polyvinyl chloride, polycarbonate, modified polyphenylene ether, polyphenylene sulfide, polyetheretherketone, liquid crystal polymers, fluororesins, polyarate, polysulfone, polyethersulfone, polyamideimide, polyetherimide, plastic polyimide, polystyrene, urethane elastomers and the like. When the surface layer and the base are made of different materials, the base can be readily separated from the surface layer after the surface layer is formed on the base compared to the case in which they are made of the same material. For example, methods known in the art such as heating or immersion in organic solvent can be suitably used to separate the surface layer of an inorganic material from the base of an organic material.

SECOND EMBODIMENT

Next, an antifouling structure according to a second embodiment of the present invention will be described in detail referring to the drawings. The same reference signs are denoted to the same components as those of the above-described embodiment, and the description thereof is omitted.

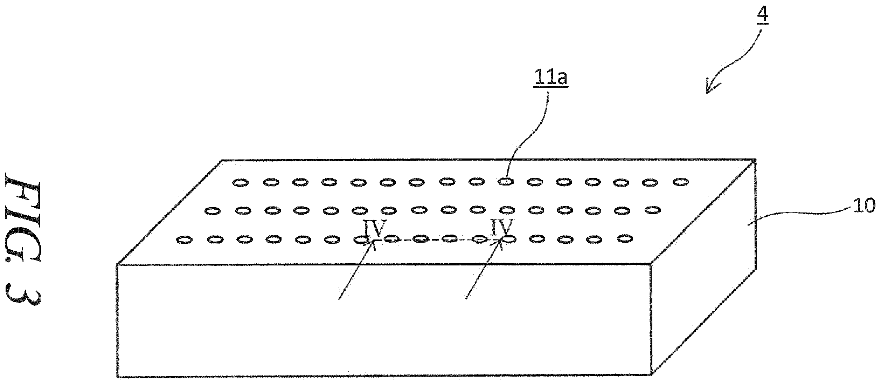

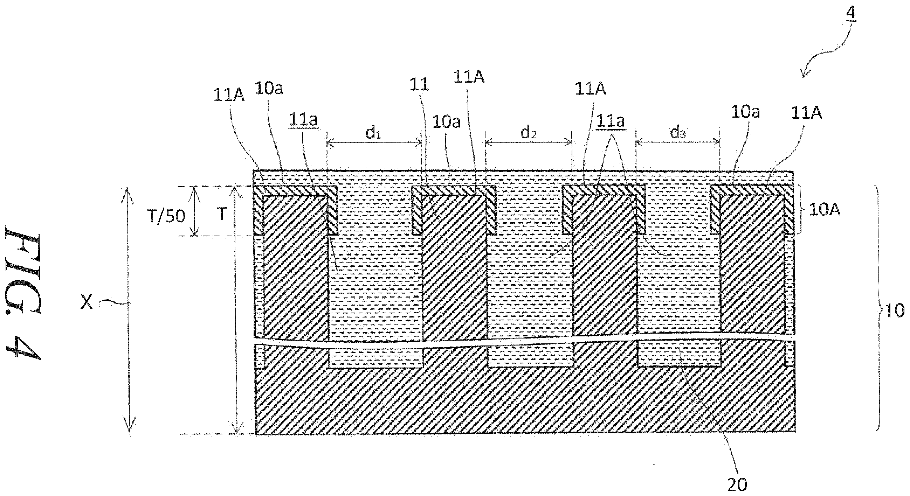

FIG. 3 is a perspective view of the outer appearance of the antifouling structure according to the second embodiment of the present invention, in which a base is removed, and a surface layer includes a microporous structure with micropores that are composed of cylindrical recesses dispersed in the surface of the surface layer. FIG. 4 is a schematic cross-sectional view of the antifouling structure of FIG. 3 taken along the line IV-IV. As illustrated in FIG. 3 and FIG. 4, the antifouling structure 4 according to the embodiment includes a surface layer 10 that is composed of a microporous structure 11 with fine micropores 11a and a fluorine-containing liquid 20 that is retained in the micropores 11a of the microporous structure 11 and covers the surface 10a of the surface layer 10. Further, elemental fluorine (not shown) is present at least in a surface portion 10A of the surface layer 10.

In the embodiment, the microporous structure 11 has the micropores 11a that are cylindrical recesses dispersed in the surface 10a of the surface layer 10.

In the embodiment, as the antifouling structure includes such microporous structure, the retention capacity for the fluorine-containing liquid in the antifouling structure is remarkably improved. This can improve the function of preventing loss of the fluorine-containing liquid in the antifouling structure due to an exposure to high temperature, i.e. improve the heat resistance. Furthermore, this can also prolong the antifouling effect accordingly. As a result, in the embodiment, excellent durability is imparted to the antifouling structure. In terms of the improvement of the retention capacity for the fluorine-containing liquid and the like, the antifouling structure according to the first embodiment is more preferred than the antifouling structure of the second embodiment.

THIRD EMBODIMENT

Next, a method for producing an antifouling structure according to a third embodiment of the present invention will be described in detail. The above-described antifouling structure according to the first or second embodiment is not limited to antifouling structures obtained by the method for producing an antifouling structure according to this embodiment or the present invention. The antifouling structure according to the first or second embodiment can be produced by subjecting the microporous structure with fine micropores formed by a sol-gel method or the like to a post treatment of fluorine-based surface modification with fluorine treatment liquid of a fluorine-based surface modifier diluted in fluorine-based solvent so as to impart water repellency to the microporous structure and then impregnating it with the fluorine-containing liquid.

The materials will be individually described in more detail.

Examples of fluorine-based surface modifiers that are preferably used include alkoxy oligomers having a fluorine functional group. Specifically, fluorine-based silane coupling agents known in the art are preferably used. Surface modification with such a surface modifier can improve the affinity between the fluorine-containing liquid and the microporous structure and thus improve the retention capacity of the fluorine-containing liquid.

Examples of fluorine-based solvents that can be used include solvents known in the art that can be used for fluorine-based surface modification.

FOURTH EMBODIMENT

Next, an antifouling structure according to a fourth embodiment of the present invention and the precursor of the antifouling structure will be described in detail referring to the drawings. The same reference signs are denoted to the same components as those of the above-described embodiments, and the description thereof is omitted.

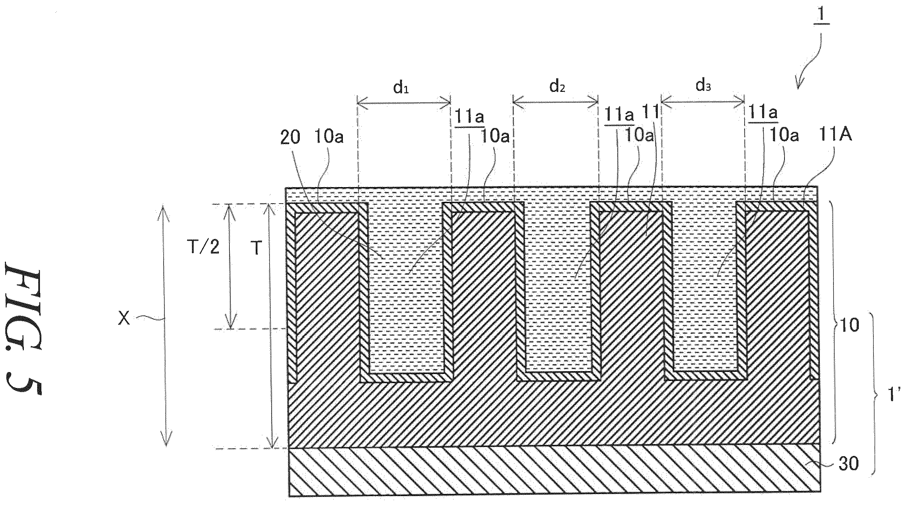

FIG. 5 is a schematic cross-sectional view of the antifouling structure according to the fourth embodiment of the present invention. As illustrated in FIG 5, the antifouling structure 1 of the embodiment includes a surface layer 10 that is formed on a base 30 and includes a microporous structure 11, and a fluorine-containing liquid 20 that is retained in micropores 11 a of the microporous structure 11 and covers the surface 10a of the surface layer 10. Further, elemental fluorine (not shown) is present in a surface portion 11A of the microporous structure 11 in the area from the surface 10a of the surface layer 10 to a depth of T/2 (T being the thickness of the surface layer) or more, more preferably 4T/5 or more (to a depth of about 2T/3 in the figure).

The precursor 1' of the antifouling structure according to the embodiment corresponds to the antifouling structure 1 of the embodiment without the fluorine-containing liquid 20. In the embodiment, the microporous structure 11 has the micropores 11a that are formed in the layer thickness (depth) direction (illustrated by the arrow X in the figure) of the surface layer 10 and that are not communicated with each other in the direction perpendicular to the layer thickness (depth) direction. To be more specific, the microporous structure 11 has the micropores 11a that are composed of cylindrical recesses dispersed in the surface 10a of the surface layer 10.

In the present invention, the elemental fluorine (not shown) present in the surface portion of the microporous structure is not derived from the fluorine-containing liquid of the antifouling structure but from a monomolecular membrane that is introduced in a production step before the fluorine-containing liquid is retained, which is described in detail later. For example, the elemental fluorine (not shown) present in the surface portion can be detected by an elemental analysis (target elements: carbon, oxygen, fluorine and silicon) based on X-ray photoemission spectroscopy (XPS). Specifically, the elemental fluorine concentration distribution in the layer thickness (depth) direction can be determined by performing an elemental analysis (target elements: carbon, oxygen, fluorine and silicon) based on X-ray photoemission spectroscopy (XPS) while etching the surface layer with argon gas. For example, when the elemental fluorine concentration is equal to or more than 3 mol% at a certain location in the layer thickness (depth) direction, it can be said elemental fluorine derived from the monomolecular membrane is present at the location. However, the definition is not particularly limited thereto.

Further, time-of-flight secondary ion mass spectroscopy can be used to confirm that the fluorine functional group such as a fluoroalkyl group, which is derived from the fluorine-based surface modifier used in forming the monomolecular membrane, is bonded to the microporous structure in the surface portion of the surface layer, for example.

As described above, in the embodiment, as elemental fluorine is present in the surface portion of the microporous structure in the area from the surface of the surface layer to a depth of T/2 with respect to the thickness T of the surface layer substantially capable of retaining the fluorine-containing liquid, the retention capacity for the fluorine-containing liquid in the antifouling structure is remarkably improved. This can improve the function of preventing loss of the fluorine-containing liquid in the antifouling structure due to an exposure to high temperature, i.e. improve the heat resistance. Furthermore, this can also prolong the antifouling effect accordingly. As a result, in the embodiment, excellent durability is imparted to the antifouling structure.

It is currently presumed that the above-described advantageous effects are obtained based on the following mechanism, which will be described in detail referring to the drawings. However, it should be understood well that the present invention also encompasses the cases where the above-described advantageous effects are obtained without the following mechanism. The same reference signs are denoted to the same components as those illustrated in the drawings, and the description thereof is omitted.

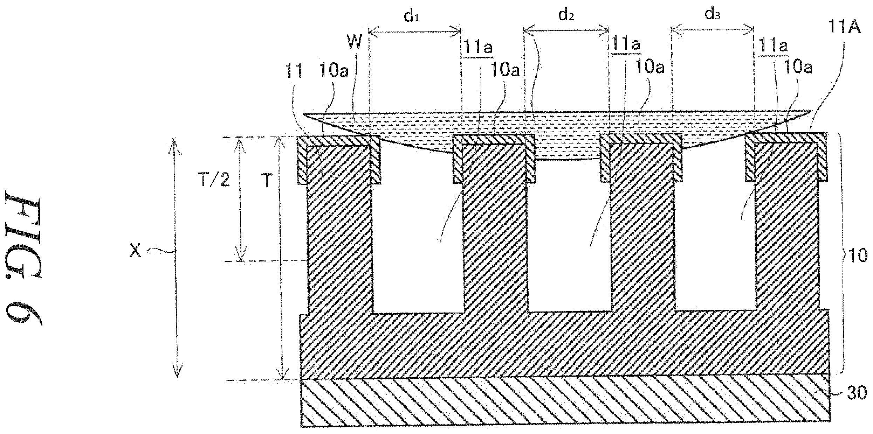

FIG. 6 is a cross-sectional view schematically illustrating the Cassie state. As illustrated in FIG. 6, elemental fluorine (not shown) is present in the surface layer 10 including the microporous structure 11 with the micropores 11 a formed on the base 30, specifically in the surface portion 11A of the microporous structure 11 around the surface 10a of the surface layer 10. In the figure, W is a part of a water droplet.

Microporous structures of a metal oxide or the like typically do not have water repellency. Further, microporous structures have relatively high surface energy due to the surface roughness compared to smooth structures. When water repellency is imparted by a post treatment of fluorine-based surface modification with a fluorine treatment liquid of a fluorine-based surface modifier diluted in a fluorine-based solvent, such a microporous structure having no water repellency exhibits poor wettability with the fluorine treatment liquid. Since the microporous structure is likely to repel the fluorine treatment liquid, the fluorine modification effects only near the surface and not in the deep part of the micropores.

When the micropores of the microporous structure are regarded as capillary tubes, the equation $h = 2T \cos\theta/\rho gr$ holds, where h is the penetration depth of liquid, T is the surface tension, $\theta$ is the contact angle, $\rho$ is the density of liquid, g is the acceleration of gravity, and r is the inner size (radius) of gaps. However, liquid cannot penetrate capillary tubes when $\theta \geq 90°$. Further, liquid requires extremely high pressure to penetrate into capillary tubes.

Water repellency such as super water repellency is typically achieved at least in the Cassie state. Water repellency is achieved even when fluorine-modification is effected only around the surface 10a of the surface layer 10 including the microporous structure 11 as illustrated in FIG. 6. The Cassie state refers to a state in which air is retained in the structure such as in the micropores 11a.

Even when the surface layer with the microporous structure that is surface-modified only around the surface is forced to retain fluorinated oil, it can retain the fluorinated oil only around the surface. Therefore, while it exhibits water repellency such as super water repellency, the fluorinated oil is likely to be lost due to an exposure to high temperature. Such loss of the fluorinated oil is likely to result in rapid depletion of the fluorinated oil.

In the embodiment, the fluorine-based surface modifier is added to the raw materials of the microporous structure so that formation of the microporous structure by phase separation and the surface modification proceed almost at the same time, which will be described later in detail. As a result, water repellency is imparted to the surface portion of the microporous structure in the area from the surface of the surface layer to a depth of T/2 (T being the thickness of the surface layer) or more.

When this surface layer with the microporous structure is forced to retain fluorinated oil, the fluorinated oil penetrate deep into the surface layer and is thus retained in the entire surface layer. Therefore, the fluorinated oil is less likely to be lost due to an exposure to high temperature. Not only the retention of the fluorinated oil is improved, the fluorinated oil is further less likely to be depleted since the surface layer with the microporous structure serves as a reservoir tank. It is presumed that this mechanism also applies to a surface layer with a microporous structure according to a fifth embodiment, which is described later.

The components will be described in more detail.

The surface layer 10 is not particularly limited as long as it may be any layer that includes the microporous structure. For example, it is preferred that the surface layer includes the microporous structure with micropores that are formed in the layer thickness (depth) direction of the surface layer and that are not communicated with each other in the direction perpendicular to the layer thickness (depth) direction. To be more specific, it is preferred that the surface layer includes the microporous structure with micropores that are composed of cylindrical recesses dispersed in the surface of the surface layer. In addition to the surface layer including such microporous structure, it is also preferred that the surface layer includes, for example, the microporous structure with micropores that are randomly disposed in the three-dimensional directions of the surface layer and are communicated with each other. Examples of materials of the microporous structure that can be used include simple oxides such as silicon oxide, aluminum oxide, magnesium oxide, titanium oxide, cerium oxide, niobium oxide, zirconium oxide, indium oxide, tin oxide, zinc oxide and hafnium oxide, complex oxides such as barium titanate, glass and the like. However, the material is not limited thereto. For example, non-oxides such as silicon nitride and magnesium fluoride can also be used. Among them, silicon oxide, aluminum oxide, titanium oxide, indium oxide, tin oxide, zirconium oxide and the like are preferred in terms of high light transmittance.

These oxides and non-oxides may be used alone or in combination of two or more. It is more preferred to contain silicon oxide in the amount of 90 mass% or more, and it is particularly preferred to contain silicon oxide in the amount of 100 mass%.

The fluorine-containing liquid 20 is not particularly limited as long as it may be any liquid that has a fluorine-based main or side chain. Examples of such liquids include fluorinated oils such as fluoroether- and fluoroalkyl-based oils. KRYTOX (registered trademark) (perfluoropolyether-based, Dupont Co.) has low vapor pressure (0.01 Pa or less) and low volatility and exhibits good retention.

It is preferred to use fluorinated oil that has a perfluoropolyether main chain in terms of the retention and the affinity.

Other examples are FLUORINERT (perfluoroalkyl-based, 3M Corp.) and NOVEC (perfluoropolyether-based, 3M Corp.), DEMNUM (perfluoroalkyl-based, DAIKIN INDUSTRIES, Ltd.) and the like. However, they have high volatility and are preferably applied to short-term usages. To adjust the viscosity or the vapor pressure of these fluorinated oils, an elemental halogen other than fluorine or a functional group having a halogen other than fluorine may be added to a side chain.

Examples of materials that can be used for the base 30 include simple oxides such as silicon oxide, aluminum oxide, magnesium oxide, titanium oxide, cerium oxide, niobium oxide, zirconium oxide, indium oxide and hafnium oxide, complex oxides such as barium titanate, glass and the like. However, the material is not limited to these compounds. For example, non-oxides such as silicon nitride and magnesium fluoride can also be used. Further, the material is not limited to these inorganic materials. For example, organic materials that can be used include non-cross-linked acrylic resins, cross-linked acrylic resins, cross-linked acrylic-urethane copolymers, cross-linked acrylic-elastomer copolymers, silicone elastomers, polyethylene, polypropylene, cross-linked polyvinyl alcohol, polyvinylidene chloride, polyethylene terephthalate, polyvinyl chloride, polycarbonate, modified polyphenylene ether, polyphenylene sulfide, polyetheretherketone, liquid crystal polymers, fluororesins, polyarate, polysulfone, polyethersulfone, polyamideimide, polyetherimide, plastic polyimide, polystyrene, urethane elastomers and the like. The base can be formed either integrally with or independently from the surface layer. Alternatively, the base may be omitted.

The thickness T of the surface layer is preferably equal to or greater than 100 nm, more preferably equal to or greater than 200 nm. When the thickness of the surface layer is less than 100 nm, the retention volume of the fluorine-containing liquid is small. This may result in a smaller improvement of the heat resistance. Further, this may result in a smaller improvement of the durability accordingly. When the thickness of the surface layer is equal to or greater than 200 nm, the retention volume of the fluorine-containing liquid is large. This results in a larger improvement of the heat resistance. Further, this results in a larger improvement of the durability accordingly. The thickness T of the surface layer is preferably equal to or less than 500 nm, more preferably equal to or less than 400 nm in terms of the transparency and the durability. When the thickness of the surface layer is greater than 500 nm, the transparency or the durability may be degraded. To be more specific, the thickness of the surface layer ranges preferably from 100 nm to 500 nm, more preferably from 200 nm to 500 nm, still more preferably from 200 nm to 400 nm. However, it should be understood well that the thickness is not limited to these ranges and may be out of these ranges as long as the functions and effects of the present invention can be achieved.

Also in the embodiment, the thickness T of the surface layer is preferably equal to or greater than 50 nm, more preferably equal to or greater than 100 nm, still more preferably equal to or greater than 200 nm in terms of ease of forming the micropores and retention of the fluorine-containing liquid. Also in the embodiment, the thickness T of the surface layer is preferably equal to or less than 8000 nm, more preferably equal to or less than 3000 nm, still more preferably equal to or less than 1000 nm, particularly preferably equal to or less than 300 nm in terms of the anti-cracking property of the membrane and reduction of the haze value. In the embodiment, the thickness T of the surface layer preferably ranges from 50 nm to 1000 nm in terms of ease of forming the micropores, retention of the fluorine-containing liquid, the anti-cracking property of the membrane and reduction of the haze value. However, it should be understood well that the thickness is not limited to these ranges and may be out of these ranges as long as the functions and effects of the present invention can be achieved. The thickness T of the surface layer can be adjusted, for example, by changing the dilution ratio, the coating speed and the like of the raw materials of the microporous structure to be applied to the base.

It is more preferred that elemental fluorine is present in the surface portion of the microporous structure in the area from the surface of the surface layer to a depth of 4T/5 with respect to the thickness T of the surface layer substantially capable for retaining the fluorine-containing liquid. This further enhances the improvement of the heat resistance. Also, this further enhances the improvement of the durability accordingly.

It is preferred that the antifouling structure has an all-optical transmittance of 70% or more and a haze value of 1% or less. The all-optical transmittance is more preferably equal to or greater than 80%, still more preferably equal to or greater than 90%. When the all-optical transmittance is equal to or greater than 70% and the haze value is equal to or less than 1%, high transparency can be ensured. This makes the antifouling structure applicable to articles that require very strict transparency such as glass for automobile parts and optical components. The haze value is required to be equal to or less than 1% for automobile parts. The haze value ranges preferably from 0.1% to 1%, and more preferably from 0.1% to 0.8%. However, it should be understood well that the haze value is not limited to these ranges and may be out of these ranges as long as the functions and effects of the present invention can be achieved.

It is preferred that the microporous structure satisfies the following Expression (1).

$$10 \ (\mathrm{nm}) \leqq D \ (\mathrm{nm}) \leqq 400 \ (\mathrm{nm})/n \qquad (1)$$

In Expression 1, D is the average diameter of the surface openings of the microporous structure, n is the refractive index of the material of the surface layer microporous structure.

As used herein, "the average diameter D of the surface openings of a microporous structure" may refer to, for example, the average of the diameters (e.g. denoted as $d_1$ to $d_3$ in FIG. 3) of circles having the same areas as the respective surface openings observed from above of the antifouling structure by scanning electron microscopy (SEM), which is calculated by image analysis.

Further, as used herein, "the refractive index n of the material of a microporous structure" may refer to, for example, the refractive index of a membrane that is made of the material having the same composition, which is measured by an Abbe refractometer. When the surface portion of the microporous structure is treated with a treatment that introduces elemental fluorine, e.g. a fluorine-based surface modification to form a monomolecular layer, it refers to the refractive index of a membrane of the material having the same composition that is treated with the same surface treatment, which is measured by an Abbe refractometer.

In the embodiment, as including the above-described microporous structure, the antifouling structure has not only good retention capacity for the fluorine-containing liquid but also high transparency. When the average diameter of the openings is equal to or greater than 10 nm, the antifouling structure can exhibit particularly good retention of the fluorine-containing liquid. When the average diameter of the openings is less than 10 nm, for example, fluorine-based surface modifier with a size of approximately 7 nm cannot penetrate into the surface layer. It may sometimes be difficult to retain the fluorine-containing liquid such as fluorinated oil. When the average diameter of the openings is equal to or less than 400/n nm, the antifouling structure can have particularly low haze value and exhibit high transparency.

Also in this embodiment, the average diameter D of the surface openings of the microporous structure is more preferably equal to or greater than 20 nm in terms of retention of the fluorine-containing liquid. Further, also in this embodiment, the average diameter D of the surface openings of the microporous structure is preferably equal to or less than 1000 nm, more preferably equal to or less than 500 nm, still more preferably equal to or less than 100 nm in terms of the anti-cracking property of the membrane, reduction of the haze value and reduction of light scattering caused by the Rayleigh scattering. Further, the average diameter D of the surface openings of the microporous structure preferably ranges from 10 nm to 100 nm in terms of retention of the fluorine-containing liquid, the anti-cracking property of the membrane, reduction of the haze value and reduction of light scattering caused by the Rayleigh scattering. However, it should be understood well that the average diameter D is not limited to these ranges and may be out of these ranges as long as the functions and effects of the present invention can be achieved. The average diameter D of the surface openings of the microporous structure can be adjusted, for example, by changing the time of producing the microporous structure, specifically the time immediately after the raw materials of the microporous structure are applied to the base until it is dried by heat. Specifically, the average diameter D of the surface openings of the microporous structure can be increased by extending the time immediately after the application until completion of the drying by heat.

Also in this embodiment, it is preferred that the thickness T of the surface layer ranges from 50 nm to 1000 nm and the average diameter D of the surface openings of the microporous structure ranges from 10 nm to 100 nm in terms of ease of forming the micropores, retention of the fluorine-containing liquid, the anti-cracking property of the membrane, reduction of the haze value and reduction of light scattering cause by the Rayleigh scattering. It is more preferred that the thickness T of the surface layer ranges from 100 nm to 1000 nm and the average diameter D of the surface openings of the microporous structure ranges from 10 nm to 100 nm. It is still more preferred that the thickness T of the surface layer ranges from 100 nm to 300 nm and the average diameter D of the surface openings of the microporous structure ranges from 10 nm to 100 nm. It is particularly preferred that the thickness T of the surface layer ranges from 200 nm to 300 nm and the average diameter D of the surface openings of the microporous structure ranges from 20 nm to 100 nm. However, it should be understood well that they are not limited to these ranges and may be out of these ranges as long as the functions and effects of the present invention can be achieved.

The evaporation loss of the fluorine-containing liquid after retention at 120°C for 24 hours is preferably less than 35 mass%. In the embodiment, as including the above-described fluorine-containing liquid, the antifouling structure has good durability. For example, even in an automobile application, the fluorine-containing liquid is less likely to spontaneously evaporate to cause deterioration of the performance, and the antifouling effect can last for a long time around ambient temperature (from 5°C to 35°C). The "evaporation loss" can be determined by spreading the fluorine-containing liquid on a Petri dish and heating it at 120°C for 24 hours. However, it should be understood well that the evaporation loss is not limited to these ranges and may be out of these ranges as long as the functions and effects of the present invention can be achieved.

The viscosity of the fluorine-containing liquid at 0°C is preferably equal to or less than 160 mm$^2$/s, more preferably from 3 mm$^2$/s to 100 mm$^2$/s, still more preferably from 8 mm$^2$/s to 80 mm$^2$/s. In the embodiment, as including such fluorine-containing liquid, the antifouling structure has good water droplets sliding characteristic. As a result, the fouling sliding characteristic can be maintained accordingly. However, it should be understood well that the viscosity is not limited to these ranges and may be out of these ranges as long as the functions and effects of the present invention can be achieved.

The surface roughness Ra of the surface layer composed of the microporous structure is not particularly limited but ranges preferably from 1 nm to 100 nm, more preferably from 1 nm to 50 nm. To remarkably improve the fouling or water droplets sliding characteristic of the surface, the surface roughness Ra preferably ranges from 1 nm to 10 nm. However, the surface roughness is not limited to these ranges at all and may be out of these ranges as long as the functions and effects of the present invention can be achieved. The surface roughness of the surface layer composed of the microporous structure can be measured, for example, by atomic force microscopy (AFM).

Also in this embodiment, the surface energy of the surface portion of the microporous structure is preferably equal to or less than 20 mN/m, more preferably from 10 mN/m to 20 mN/m. In the embodiment, as the antifouling structure includes such microporous structure, the affinity between the fluorine-containing liquid and the microporous structure is improved and thus the fluorine-containing liquid spreads to moist over the entire surface. This can remarkably improve the retention capacity of the fluorine-containing liquid in the antifouling structure. Further, this can also prolong the antifouling effect accordingly. As a result, the antifouling structure has excellent durability.

FIFTH EMBODIMENT

Next, an antifouling structure according to a fifth embodiment of the present invention and the precursor of the antifouling structure will be described in detail referring to the drawings. The same reference signs are denoted to the same components as those of the above-described embodiments, and the description thereof is omitted.

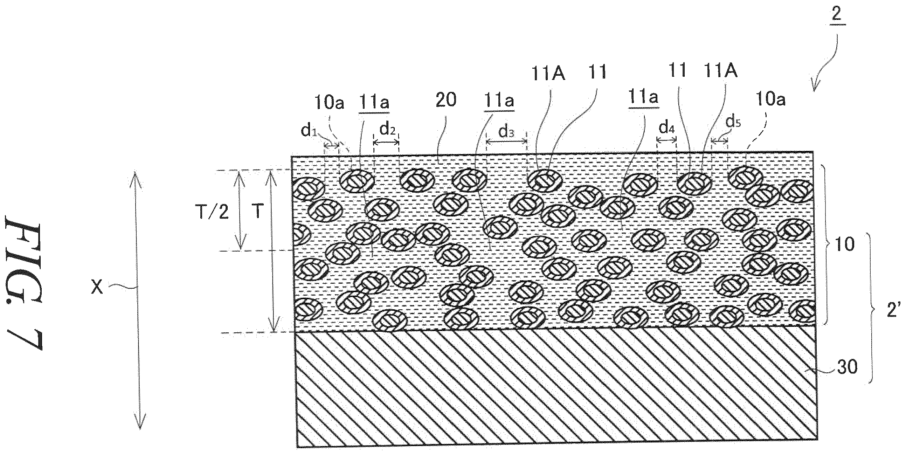

FIG. 7 is a schematic cross-sectional view of the antifouling structure according to a fifth embodiment of the present invention. As illustrated in FIG. 7, the antifouling structure 2 of the embodiment includes a surface layer 10 that is formed on a base 30 and includes the microporous structure 11, and a fluorine-containing liquid 20 that is retained in micropores 11a of the microporous structure 11 and covers the surface 10a of the surface layer 10. Further, elemental fluorine (not shown) is present in a surface portion 11A of the microporous structure 11 in the area from the surface 10a of the surface layer 10 to a depth of T/2 (T being the thickness of the surface layer) or more, more preferably 4T/5 or more (to a depth of T in the figure).

The precursor 2' of the antifouling structure according to the embodiment corresponds to the antifouling structure 2 of the embodiment without the fluorine-containing liquid 20. In the embodiment, the microporous structure 11 has micropores 11a that are randomly formed in the three-dimensional directions of the surface layer 11 and that are communicated with each other.

According to the above-described embodiment, the retention capacity of the fluorine-containing liquid in the antifouling structure is remarkably improved. This can improve the function of preventing loss of the fluorine-containing liquid in the antifouling structure due to an exposure to high temperature, i.e. improve the heat resistance. Furthermore, this can also prolong the antifouling effect accordingly. As a result, excellent durability is imparted to the antifouling structure. In terms of the improvement of the retention of the fluorine-containing liquid and the like, the antifouling structure according to the fifth embodiment is more preferred than the antifouling structure of the fourth embodiment.

SIXTH EMBODIMENT

Next, a method for producing an antifouling structure according to a sixth embodiment of the present invention will be described in detail. The above-described antifouling structure according to the fourth or fifth embodiment is not limited to antifouling structures obtained by the method for producing the antifouling structure according to this embodiment or the present invention. However, in the production of the antifouling structure according to the fourth or fifth embodiment, the fluorine-containing surface layer with the microporous structure can be formed by applying an application liquid containing a polymerizable organometallic compound, an organometallic compound having a fluorine functional group and an acid or basic catalyst to a base, and then heating it at 20°C to 200°C to precure it and thereafter further heating it at 300°C to 500°C, so that elemental fluorine is present in the surface portion of the microporous structure in the area from the surface of the surface layer to a depth of at least T/2 (T being the thickness of the surface layer). The antifouling structure according to the fourth or fifth embodiment can thus be readily produced.

Surface modification is conventionally achieved by a post treatment in which the surface layer is immersed in the fluorine-containing liquid for as long as 48 hours. However, it becomes possible to eliminate such a surface modification step or to reduce the processing time of the surface modification step. It should be noted that the antifouling structure of the present invention cannot be obtained only by simply extending the processing time of the surface modification step.

The method for producing the antifouling structure according to the sixth embodiment of the present invention will be described in detail referring to the drawings. The same reference signs are denoted to the same components as those of the above-described embodiments, and the description thereof is omitted.

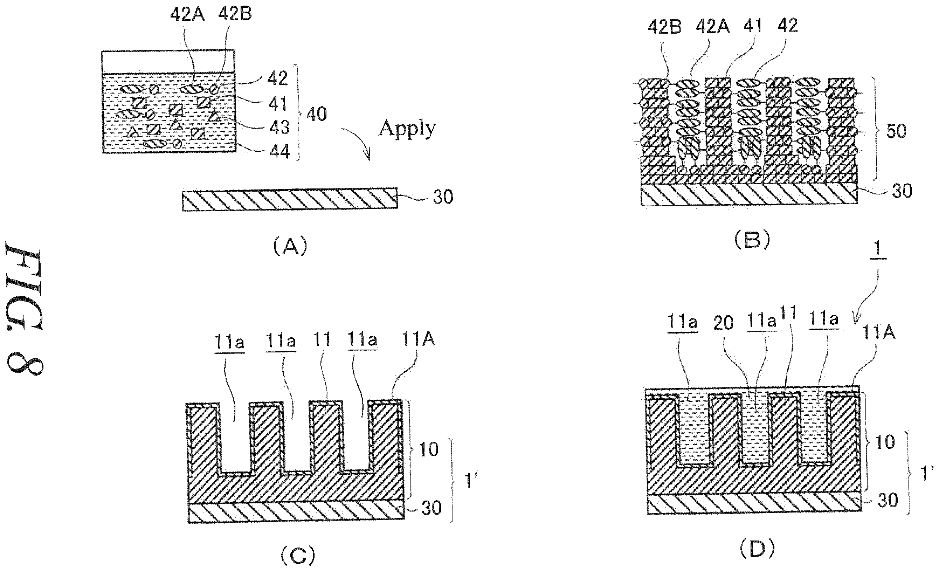

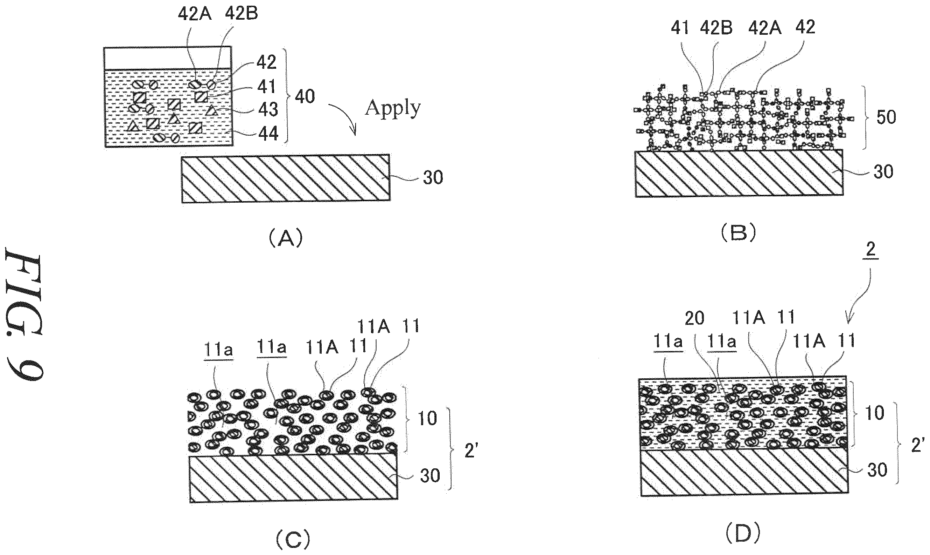

FIG. 8 is an explanatory view of an example of the method for producing the antifouling structure according to the sixth embodiment of the present invention. FIG. 9 is an explanatory view of another example of the method for producing the antifouling structure according to the sixth embodiment of the present invention.

As illustrated in FIG. 8, the method for producing the antifouling structure of the embodiment, which is an example method for producing the antifouling structure of the fourth embodiment, involves the following Step 1 to Step 4. As illustrated in FIG. 9, the method for producing the antifouling structure of the embodiment, which is an example method for producing the antifouling structure of the fifth embodiment, involves the following Step 1' to Step 4'.

As illustrated in FIG. 8 (A) and FIG. 9 (A), Step 1 or Step 1' is to apply an application liquid 40 to a base 30. The application liquid 40 contains a polymerizable organometallic compound 41, an organometallic compound 42 having a fluorine functional group 42A, an acid (or basic) catalyst 43 and a dispersion medium 44. For example, methods known in the art such as spin coating, spraying, roll coating, flow coating and dip coating can be used to apply the application liquid to the base. As a result, a coating layer 50 is formed on the base 30 (see FIG. 8 (B) and FIG. 9(B)).

Then, as illustrated in FIG. 8 (B) and FIG. 9 (B), Step 2 (or Step 2'), which is performed after Step 1 (or Step 1'), is to heat the formed coating layer 50 so as to remove the dispersion medium in the coating layer 50. For example, a heat treatment in the range of 20°C to 200°C for 30 minutes to 6 hours can remove the dispersion medium in the coating layer. As a result, a precured coating layer 50 is formed. The precured coating layer 50 has a structure that is based on phase separation between a portion that contains the fluorine functional groups 42A of the organometallic compound 42 having the fluorine functional group 42A and a portion (with relatively higher surface energy) that contains the other moieties 42B of the organometallic compound 42 having the fluorine functional group 42A and the polymerizable organometallic compound 41, which is caused by mutual aggregation of the fluorine functional groups 42A of the organometallic compound 42 having the fluorine functional group 42A with relatively low surface energy in the coating layer 50 before the heat treatment.

As illustrated in FIG. 8 (C) and FIG. 9 (C), Step 3 (or Step 3'), which is performed after Step 2 (or Step 2'), is to heat the precured coating layer 50 to cause polymerization of the materials in the coating layer 50. For example, a heat treatment in the range of 300°C to 500°C for 30 minutes to 2 hours forms the surface layer (fluorine-containing surface layer) 10 with the microporous structure 11. The fluorine functional group 42A that is directly bound to the microporous structure 11 has high heat resistance and remains in the surface even after the heat treatment. That is, almost simultaneously with the formation of the microporous structure 11 from the polymerizable organometallic compound 41 and the like, the fluorine functional groups 42A of the organometallic compound 42 having the fluorine functional group 42A form the predetermined surface portion 11A where elemental fluorine is present.

As illustrated in FIG. 8 (D) and FIG. 9 (D), subsequent Step 4 (or Step 4'), which is performed after Step 3 (or Step 3'), is to force the surface layer 10 including the microporous structure 11 with the predetermined surface portion 11A to retain the fluorine-containing liquid 20. For example, the fluorine-containing liquid is placed dropwise on the surface layer and is spread with a cloth or the like. In this way, the antifouling structure according to the above-described fourth or fifth embodiment is obtained.

Although not shown in the figures, it is preferred to subject the surface layer (fluorine-containing surface layer) with the microporous structure to an additional surface treatment with an organometallic compound having a fluorine functional group after Step 3 (or Step 3') and before Step 4 (or Step 4'). When the elemental fluorine in the surface of the surface layer is removed in the above-described heat treatment, this surface treatment can immediately recover the presence of elemental fluorine derived from a monomolecular membrane. When the elemental fluorine in the surface of the surface layer is not removed in the above-described heat treatment, this surface treatment can increase the density of elemental fluorine.

The materials will be individually described in more detail.

The polymerizable organometallic compound 41 is a raw material of the microporous structure, which contains a component of the material of the microporous structure and can be dispersed in a dispersion liquid described later to form a sol. Among such materials, it is preferred to use at least one of an alkoxysilane monomer and an alkoxysilane oligomer as the polymerizable organometallic compound so as to form the microporous structure of silicon oxide since it decreases the refractive index of the microporous structure, is less likely to cause haze and can improve the transparency.

Specifically, for example, silicates including alkoxysilane monomers such as tetraethoxysilane, alkoxysilane oligomers such as methyl silicate, ethyl silicate, propyl silicate and butyl silicate can be usued. However, the polymerizable organometallic compound is not limited thereto.

In Step 1, it is preferred to use a suitable mixture of alkoxysilane monomers or alkoxysilane oligomers with different sizes or bulkinesses since such a mixture is likely to form the microporous structure having the structure as illustrated in FIG. 8 (B) to FIG. 8(D).

In contrast, in Step 1', it is preferred to use an alkoxysilane monomer or alkoxysilane oligomer with a uniform size or bulkiness alone since such a compound is likely to form the microporous structure having the structure as illustrated in FIG. 9 (B) to FIG. 9 (D).

Examples of the organometallic compound 42 having the fluorine functional group include fluorine-based silane coupling agents known in the art.

In Step 1, it is preferred to use a bulky fluorine-based silane coupling agent that has a fluorine functional group with low surface energy. However, the organometallic compound is not particularly limited. Specifically, for example, it is preferred that the fluoroalkyl group has 5 to 20 carbons bearing a fluorine substituent and 5 to 20 carbons.

In Step 1', it is preferred to use a small-size fluorine-based silane coupling agent that has a fluorine functional group with low surface energy. However, the organometallic compound is not particularly limited. Specifically, for example, it is preferred that the fluoroalkyl group has 1 to 4 carbons bearing a fluorine substituent and 1 to 4 carbons.

Examples of the acid (basic) catalyst 43 include acids such as hydrochloric acid, nitric acid and sulfuric acid and bases such as sodium hydroxide.

Examples of the dispersion liquid 44 include a mixture of triethylene glycol, methanol, ethanol, propanol, isopropanol, butanol, n-hexane or the like with water. However, the dispersion liquid 44 is not limited thereto.

SEVENTH EMBODIMENT

Next, an automobile part according to a seventh embodiment of the present invention will be described in detail.

The automobile part of the embodiment includes the antifouling structure of the present invention.

Examples of such automobile parts include camera lenses, mirrors, glass windows, painted surfaces such as bodies, various light covers, door knobs, meter panels, window panels, radiator fins, evaporators and the like. However, the automobile part is not limited thereto.

The automobile part including the above-described antifouling structure has the excellent heat resistance, the excellent transparency, the excellent water droplets sliding characteristic and the excellent durability and thus contributes to reducing the number of car wash or car cleaning. For example, when the automobile part is applied to onboard cameras, mirrors, windows and the like, this can ensure a clear view even in a rain or on a rough road.

EXAMPLES

Hereinafter, the present invention will be described in more detail with examples.

Example 1-1

First, the polymerizable organometallic compound, the organometallic compound having the fluorine functional group and the acid catalyst as listed in Table 1 were mixed and stirred at room temperature (25°C) for 10 minutes to give a sol. Then, the sol was diluted with the dispersion medium as listed in Table 1 to give an application liquid to be used in the example. The application liquid was applied by spin coating (rotation speed of 1500 rpm, rotation time of 20 seconds, humidity of 60%) so that a coating layer was formed on a glass base. The coating layer thus formed was heated in an oven (heating temperature of 150°C, heating time of 1 hour) to remove the dispersion medium, so that the coating layer was precured. Thereafter, the precured coating layer was heated at 400°C for 1 hour to give the precursor of an antifouling structure of the example.

Thereafter, the fluorine-containing liquid as listed in Table 1 was applied to the surface layer of the precursor of the antifouling structure, and excess oil was wiped off. The antifouling structure of the example was thus obtained.

Example 1-2

An antifouling structure of the example was produced by repeating the same procedure as that of Example 1-1 except that the sol was prepared by mixing and stirring the polymerizable organometallic compound, the organometallic compound having the fluorine functional group and the acid catalyst as listed in Table 1 at room temperature (25°C) for 10 minutes, and the application liquid to be used in the example was prepared by diluting the sol with the dispersion medium as listed in Table 1.

Example 1-3

First, the polymerizable organometallic compound, the organometallic compound having the fluorine functional group and the acid catalyst as listed in Table 1 were mixed and stirred at room temperature (25°C) for 10 minutes to give a sol. Then, the sol was diluted with the dispersion medium as listed in Table 1 to give an application liquid to be used in the example. The application liquid was applied by spin coating (rotation speed of 1500 rpm, rotation time of 20 seconds, humidity of 60%) so that a coating layer was formed on a glass base. The coating layer thus formed was heated in an oven (heating temperature of 150°C, heating time of 1 hour) to remove the dispersion medium, so that the coating layer was precured. Thereafter, the precured coating layer was heated at 400°C for 1 hour to give the first precursor of an antifouling structure of the example.

Then, the surface layer of the first precursor of the antifouling structure was immersed in the surface modifier as listed in Table 1 for 1 hour. The precursor was collected and thereafter dried by heating at 150°C for 1 hour to give the second precursor of the antifouling structure of the example.

Thereafter, the fluorine-containing liquid as listed in Table 1 was applied to the surface layer of the second precursor of the antifouling structure, and excess oil was wiped off. The antifouling structure of the example was thus obtained.

Example 1-4

An antifouling structure of the example was produced by repeating the same procedure as that of Example 1-3 except that the sol was prepared by mixing and stirring the polymerizable organometallic compound, the organometallic compound having the fluorine functional group and the acid catalyst as listed in Table 1 at room temperature (25°C) for 10 minutes, and the application liquid to be used in the example was prepared by diluting the sol with the dispersion medium as listed in Table 1.

Example 1-5

An antifouling structure of the example was produced by repeating the same procedure as that of Example 1-1 except that the sol was prepared by mixing and stirring the polymerizable organometallic compound, the organometallic compound having the fluorine functional group and the acid catalyst as listed in Table 1 at room temperature (25°C) for 10 minutes, and the application liquid to be used in the example was prepared by diluting the sol with the dispersion medium as listed in Table 1.

Example 1-6

An antifouling structure of the example was produced by repeating the same procedure as that of Example 1-3 except that the sol was prepared by mixing and stirring the polymerizable organometallic compound, the organometallic compound having the fluorine functional group and the basic catalyst as listed in Table 1 at room temperature (25°C) for 10 minutes, and the application liquid to be used in the example was prepared by diluting the sol with the dispersion medium as listed in Table 1.

Table 1

| | Application Liquid | | | | | |
| --- | --- | --- | --- | --- | --- | --- |
| | Polymerizable Organometallic Compound | | Organometallic Compound Having Fluorine Functional Group | | Acid (or Basic) Catalyst | |
| | Type (-) | Amount (g) | Type (-) | Amount (g) | Type (-) | Amount (g) |
| Example 1-1 | Tetraethoxysilane | 0.74 | 1,1,1,2,2,3,3,4,4,5,5,6,6,7,7,8,8,9,9,10,10-henicosafluoro-12-(trimethoxysilyl)dodecane | 0.057 | 0.1 N Hydrochloric Acid | 0.10 |
| Example 1-2 | Ethyl Silicate *2 | 0.74 | 1,1,1,2,2,3,3,4,4,5,5,6,6,7,7,8,8,9,9,10,10-henicosafluoro-12-(trimethoxysilyl)dodecane | 0.057 | 0.1 N Hydrochloric Acid | 0.10 |
| Example 1-3 | Ethyl Silicate *2 | 0.74 | Trifluoropropyl trimethoxysilane | 0.056 | 0.1 N Nitric Acid | 0.10 |
| Example 1-4 | Ethyl Silicate *2 | 0.60 | Trifluoropropyl trimethoxysilane | 0.17 | 0.1 N Hydrochloric Acid | 0.10 |
| Example 1-5 | Ethyl Silicate *2 | 0.60 | 1,1,1,2,2,3,3,4,4,5,5,6,6,7,7,8,8,9,9,10,10-henicosafluoro-12-(trimethoxysilyl)dodecane | 0.17 | 0.1 N Hydrochloric Acid | 0.10 |
| Example 1-6 | Ethyl Silicate *2 | 0.54 | 1,1,1,2,2,3,3,4,4,5,5,6,6,7,7,8,8,9,9,10,10-henicosafluoro-12-(trimethoxysilyl)dodecane | 0.22 | 0.1 N Sodium Hydroxide | 0.10 |

Table 1 (continued)

| | Application Liquid Dispersion Medium | | Surface Modification Treatment Step | Fluorine-Containing Liquid Immersion Step | |
| --- | --- | --- | --- | --- | --- |
| | Type (-) | Amount (g) | Type of Surface Modifier (-) | Type of Fluorinated Oil (-) | Viscosity $(mm^2/s)$ |
| Example 1-1 | 2-Propanol | 3.59 | - | Perfluoropolyeter-based *1 | 8 |
| Example 1-2 | 2-Propanol | 3.59 | - | Perfluoropolyeter-based *1 | 8 |
| Example 1-3 | 2-Propanol | 3.58 | FLUOROSURF FG5020 *3 | Perfluoropolyeter-based *1 | 8 |
| Example 1-4 | 2-Propanol | 3.48 | FLUOROSURF FG5020 *3 | Perfluoropolyeter-based *1 | 8 |
| Example 1-5 | 2-Propanol | 3.48 | - | Perfluoropolyeter-based *1 | 8 |
| Example 1-6 | 2-Propanol | 3.44 | FLUOROSURF FG5020 *3 | Perfluoropolyeter-based *4 | 80 |

*1 KRYTOX GPL101
*2 Ethyl Silicate 40 (Colcoat Co., Ltd.)
*3 Solution of 0.2-2.0 mass% trifluoropropyl trimethoxy silane in Novec 7100
*4 KRYTOX GPL103

Example 1-7

First, 0.93 g of water, 1.5 g of triethylene glycol and 0.78 g of isopropanol were homogenously mixed, and 0.3 g of 32 N sulfuric acid is added to the mixture to give Solution A. Further, 8.04 g of ethyl silicate (Ethyl Silicate 40, Colcoat Co., Ltd.) and 0.78 g of isopropanol were homogenously mixed to give Solution B. Solution A and Solution B were mixed together and stirred with a stirrer for 15 minutes to give a sol. The sol was diluted by five times with isopropanol to give an application liquid to be used in the example. The application liquid was applied by spin coating (rotation speed of 1500 rpm, rotation time of 20 seconds, humidity of 60%) so that a coating layer was formed on a glass base. The coating layer thus formed was heated in an oven (heating temperature of 150°C, heating time of 1 hour) to remove the dispersion medium, so that the coating layer was precured. Thereafter, the precured coating layer was heated at 500°C for 1 hour to give a microporous structure of the example on the glass base.

Then, the surface layer with the microporous structure was immersed in FLUOROSURF FG-5020 (Fluoro Technology, Co., 0.2 mass% to 2.0 mass% solution of trifluoropropyl trimethoxysilane in NOVEC 7100 (3M, Co.), the same applies hereafter) for 48 hours. The surface layer was collected and thereafter dried by heating at 150°C for 1 hour to give the precursor of the antifouling structure of the example.

Thereafter, a fluorine-containing liquid (perfluoropolyether-based fluorinated oil (KRYTOX (registered trademark) GPL101, Dupont Co.) was applied to the surface layer of the precursor of the antifouling structure, and excess oil was wiped off. The antifouling structure of the example was thus obtained. The specification of the examples is partly shown in Table 2. The "surface roughness" in Table 2 was measured by atomic force microscopy (AFM). The evaporation loss after retention at 120°C for 24 hours of the fluorine-containing liquid was less than 35 mass% in all examples in Table 2. The "all-optical transmittance" in Table 2 was measured according to JIS K7361. The "haze" in Table 2 was measured with a haze meter (Murakami Color Research Laboratory Co., Ltd.).

Table 2

| | Antifouling Structure | | | | |
| | Microporous Structure | | | | |
| | Condition of Micropores (-) | Thickness of Surface Layer (T) (nm) | Depth of Fluorine Detected (t) (nm) | t/T (-) | Material (-) (Refractive Index: n (-)) |
|---|---|---|---|---|---|
| Example 1-1 | Randomly and Three-Dimensionally Arranged | 200 | 180 | 0.90 | Silicon Oxide (1.48) |
| Example 1-2 | Randomly and Three-Dimensionally Arranged | 200 | 180 | 0.90 | Silicon Oxide (1.48) |
| Example 1-3 | Randomly and Three-Dimensionally Arranged | 100 | 90 | 0.90 | Silicon Oxide (1.48) |
| Example 1-4 | Randomly and Three-Dimensionally Arranged | 200 | 150 | 0.75 | Silicon Oxide (1.48) |
| Example 1-5 | Randomly and Three-Dimensionally Arranged | 200 | 170 | 0.85 | Silicon Oxide (1.48) |
| Example 1-6 | Randomly and Three-Dimensionally Arranged | 300 | 270 | 0.90 | Silicon Oxide (1.48) |
| Example 1-7 | Randomly and Three-Dimensionally Arranged | 200 | 7 | 0.04 | Silicon Oxide (1.48) |

Table 2 (continued)

| | Antifouling Structure | | | | | |
| | Microporous Structure | | fluorine-Containing Liquid | | All-Optical Transmittance (%) | Haze (%) |
| | Average Diameter (D) of Surface Openings (nm) | Surface Roughness (Ra) (nm) | Type of Fluorinated Oil (-) | Viscosity (mm²/s) | | |
|---|---|---|---|---|---|---|
| Example 1-1 | 10 | 3 | Perfluoropolyether-based *1 | 8 | 93.1 | ≦1 |
| Example 1-2 | 10 | 3 | Perfluoropolyether-based *1 | 8 | 93.3 | ≦1 |
| Example 1-3 | 10 | 3 | Perfluoropolyether-based *1 | 8 | 92.1 | ≦1 |
| Example 1-4 | 50 | 5 | Perfluoropolyether-based *1 | 8 | 92.8 | ≦1 |
| Example 1-5 | 50 | 6 | Perfluoropolyether-based *1 | 8 | 93.6 | ≦1 |
| Example 1-6 | 200 | 12 | Perfluoropolyether-based *2 | 80 | 91.9 | ≦1 |
| Example 1-7 | 10 | 3 | Perfluoropolyether-based *1 | 8 | 93.2 | ≦1 |

*1 KRYTOX GPL101
*2 KRYTOX GPL103

EVALUATION OF PERFORMANCE

The following performances were evaluated for the antifouling structures of the above-described samples.

Heat Resistance

The heat resistance of the antifouling structures of the examples was evaluated by repeating a retention test at an atmospheric temperature of 90°C for 4 hours for four times and thereafter measuring the sliding angle. The results are shown in Table 3. For heat resistance in Table 3, "A" denotes a sliding angle of 10° or less, "B" denotes a sliding angle of greater than 10° and equal to or less than 15°, "C" denotes a sliding angle of greater than 15° and equal to or less than 30°, and "D" denotes a sliding angle of greater than 30°.

Transparency

The transparency of the antifouling structures of the examples was evaluated by measuring the haze value with a haze meter (Murakami Color Research Laboratory Co., Ltd.). The results are shown in Table 3. For transparency in Table 3, "A" denotes a haze value of 1% or less, "B" denotes a haze value of greater than 1% and equal to or less than 3%, and "C" denotes a haze value of greater than 3%.

Water Droplets Sliding Characteristic

The water droplets sliding characteristic of the antifouling structures of the examples was evaluated by dropwise placing 20 μL of water and measuring the sliding angle thereof. The results are shown in Table 3. For water droplets sliding characteristic in Table 3, "A" denotes a sliding angle of 10° or less, "B" denotes a sliding angle of greater than 10° and equal to or less than 20°, "C" denotes a sliding angle of greater than 20°.

Durability

The durability of the antifouling structures of the examples was evaluated by reciprocally sliding with canvas for 1000 times and thereafter measuring the sliding angle in the same procedure as in the evaluation of water droplets sliding characteristic. The results are shown in Table 3. For durability in Table 3, "A" denotes a sliding angle of 15° or less, "B" denotes a sliding angle of greater than 15°.

Table 3

| | Evaluation Result | | | |
|---|---|---|---|---|
| | Heat Resistance | Transparency | Water droplets sliding characteristic | Durability |
| Example 1-1 | A | A | A | A |
| Example 1-2 | A | A | A | A |
| Example 1-3 | B | A | A | A |
| Example 1-4 | A | A | A | A |
| Example 1-5 | A | A | A | A |
| Example 1-6 | A | A | A | A |
| Example 1-7 | C | A | A | A |

As seen in Table 1 to Table 3, the antifouling structures of inventive Example 1-1 to Example 1-6 have higher heat resistance than the antifouling structure of Example 1-7. This is presumably because of the remarkable improvement of the retention of the fluorine-containing liquid in the antifouling structures of Example 1-1 to Example 1-6, which is achieved by the surface modification that allows elemental fluorine to be present in a deep part, specifically in the surface portion of the microporous structure in the area from the surface of the surface layer composed of the integral microporous structure to a depth of T/2 or more (T being the thickness of the surface layer). In contrast, in the antifouling structure of Example 1-7, elemental fluorine is present only around the surface of the surface layer composed of the integral microporous structure, and elemental fluorine is absent in a deep part of the surface layer.

As seen in Table 1 to Table 3, the antifouling structures of Example 1-1 to Example 1-6 have high transparency, good water droplets sliding characteristic and high durability.

Further, as seen in Table 1 to Table 3, the antifouling structures of Example 1-1 to Example 1-6 have high heat resistance presumably because the thickness of the surface layers is equal to or greater than 100 nm. Accordingly, the antifouling structures of Example 1-1, Example 1-2 and Example 1-4 to Example 1-6 have even higher heat resistance presumably because the thickness of the surface layers is equal to or greater than 200 nm.

Further, as seen in Table 1 to Table 3, the antifouling structures of Example 1-1, Example 1-2 and Example 1-4 to Example 1-6 have even higher heat resistance presumably because the thickness of the surface layer is equal to or greater than 200 nm and the elemental fluorine is present in the surface portion of the microporous structure in the area from the surface of the surface layer to a depth of 4T/5.

As seen in Table 1 to Table 3, the antifouling structures of Example 1-1 to Example 1-6 have high transparency presumably because the all-optical transmittance is equal to or greater than 70% and the haze value is equal to or less than 1%.

As seen in Table 1 to Table 3, the antifouling structures of Example 1-1 to Example 1-6 have high transparency and high durability presumably because they satisfy the condition of the above-described Expression 1.

As seen in Table 1 to Table 3, the antifouling structures of Example 1-1 to Example 1-6 have good water droplets sliding characteristic and high durability presumably because the predetermined fluorine-containing liquid is used.

As seen in Table 1 to Table 3, antifouling structures with high heat resistance, high transparency, good water droplets sliding characteristic and high durability can be readily produced by the methods for producing the antifouling structures of Example 1-1 to Example 1-6.

Example 2-1

Into a screw-top tube A (screw-cap bottle No. 7, 50cc, LABORAN, Co., the same applies hereafter), 0.69 g of pure water (produced with a high performance pure water production system (Japan Millipore, Co.), the same applies hereafter), 1.5 g of triethylene glycol (triethylene glycol, Mitsubishi Chemical Corporation, the same applies hereinafter), 0.78g of isopropyl alcohol (2-propanol, Wako Pure Chemical Industries, Ltd., the same applies hereinafter) and 0.5 g of sulfuric acid (96% sulfuric acid (special grade), Kanto Kagaku, Co., the same applies hereafter) were sequentially charged in the written order. Into a screw-top tube B (50 cc), 8.04 g of ethyl silicate (Ethyl Silicate 40, Colcoat Co., Ltd., the same applies hereafter) and 0.78 g of isopropyl alcohol were sequentially charged in the written order.

A stirrer and a thermocouple (Digital Thermometer IT-2000, As One Corp., the same applies hereafter) were set in the screw-top tube A, and the screw-top tube A was placed on a magnetic stirrer (Hot Plate Stirrer SRS710HA, ADVANTAC, the same applies hereafter). The materials in the screw-top tube B were transferred to the screw-top tube A. The magnetic stirrer was turned on to start stirring at 1500 rpm. After the temperature measured by the thermocouple reached 34.8°C (peak temperature), the stirring was further continued for 30 minutes.

On the other hand, to clean the surface and to expose hydroxyl groups, a soda-lime glass (soda-lime glass 100 mm, NSG Precision Co., Ltd., the same applies hereafter) was treated with a plasma generator (atmospheric plasma generator, Techno Alpha Co., Ltd., the same applies hereafter) at a rate of $1cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the materials were stirred at 1500 rpm for 1 minute.

An aliquot (1.5 mL) of the solution mixed and stirred in the screw-top tube C was collected and applied to the plasma-treated soda-lime glass by spin coating with a spin coater (K-359SD1, Kyowa Riken Co., Ltd., the same applies hereafter) (3 seconds at a rotation speed of 100 rpm, then 5 seconds at 500 rpm, and thereafter 15 seconds at 1000 rpm).

The spin-coated soda-lime glass was placed on a flat place and dried by air for 2 minutes. The air-dried soda-lime glass was dried in a preheated dry oven (Cosmos, Isuzu Manufacturing Co., the same applies hereafter) at 150°C for 1 hour. The heat-dried soda-lime glass was allowed to cool to room temperature (25°C) in the dry oven.

The cooled soda-lime glass was further calcined in a preheated muffle furnace (FP410, Yamato Scientific Co., Ltd., the same applies hereafter) at 500°C for 1 hour. The calcined soda-lime glass was allowed to cool to room temperature (25°C) in the muffle furnace.

The cooled soda-lime glass was immersed in FLUOROSURF FG-5020 for 48 hours for surface modification. The soda-lime glass collected from the FLUOROSURF FG-5020 was dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner (BAKUSEN W-113 MK-II, 24 KHz/31 kHz, Yamato Scientific Co., Ltd., the same applies hereafter) for 5 minutes.

Thereafter, 0.011 g of KRYTOX GPL 103 (KRYTOX GPL103, Dupont Co., the same applies hereafter) was applied to the washed soda-lime glass and left for 1 hour. The antifouling structure of the embodiment was thus obtained.

Example 2-2

Into a screw-top tube A (50 cc), 1.04 g of pure water, 1.65 g of triethylene glycol, 0.78g of isopropyl alcohol and 0.2 g of sulfuric acid were sequentially charged in the written order. Into a screw-top tube B (50 cc), 11.25 g of tetraethoxysilane (98% tetr-thoxysilane, TEOS, Wako Pure Chemical Industries, Ltd., the same applies hereafter) and 0.78 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. When the temperature measured by the thermocouple reached 43.2°C (peak temperature), the stirring was stopped.

On the other hand, to clean the surface and to expose hydroxyl groups, a soda-lime glass was treated with a plasma generator at a rate of 1cm$^2$/s.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in FLUOROSURF FG-5020 for 48 hours for surface modification. The soda-lime glass collected from the FLUOROSURF FG-5020 was dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GP102 (KRYTOX GPL102, Dupont Co., the same applies hereafter) was applied to the washed soda-lime glass and left for 1 hour. The antifouling structure of the embodiment was thus obtained.

(Example 2-3)

Into a screw-top tube A (50 cc), 0.93 g of pure water, 1.5 g of triethylene glycol, 0.78g of isopropyl alcohol and 0.3 g of sulfuric acid were sequentially charged in the written order. Into a screw-top tube B (50 cc), 8.04 g of ethyl silicate and 0.78 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. After the temperature measured by the thermocouple reached 36.8°C (peak temperature), the stirring was further continued for 30 minutes.

On the other hand, to clean the surface and to expose hydroxyl groups, a soda-lime glass was treated with a plasma generator at a rate of 1cm$^2$/s.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was placed on a flat place and dried by air for 2 minutes. The air-dried soda-lime glass was dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in a mixture solution of 1 g of trifluoropropyl trimethoxysilane, 50 g of isopropanol and 1 g of nitric acid (0.1 N) for 48 hours for surface modification. The soda-lime glass was collected from the mixture solution and dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GPL103 was applied to the washed soda-lime glass and left for 1 hour. The antifouling structure of the embodiment was thus obtained.

(Example 2-4)

Into a screw-top tube A (50 cc), 0.93 g of pure water, 1.5 g of triethylene glycol, 0.78g of isopropyl alcohol and 0.3 g of sulfuric acid were sequentially charged in the written order. Into a screw-top tube B (50 cc), 8.04 g of ethyl silicate and 0.78 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. After the temperature measured by the thermocouple reached 34.5°C (peak temperature), the stirring was further continued for 30 minutes.

On the other hand, to clean the surface and to expose hydroxyl groups, a soda-lime glass was treated with a plasma generator at a rate of $1cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was placed on a flat place and dried by air for 2 minutes. The air-dried soda-lime glass was dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in FLUOROSURF FG-5020 for 48 hours for surface modification. The soda-lime glass was collected from the FLUOROSURF FG-5020 and dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GPL103 was applied to the washed soda-lime glass and left for 1 hour. The antifouling structure of the embodiment was thus obtained.

(Example 2-5)

Into a screw-top tube A (50 cc), 0.93 g of pure water, 1.5 g of triethylene glycol, 0.78g of isopropyl alcohol and 0.3 g of sulfuric acid were sequentially charged in the written order. Into a screw-top tube B (50 cc), 8.04 g of ethyl silicate and 0.78 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. After the temperature measured by the thermocouple reached 35.5°C (peak temperature), the stirring was further continued for 30 minutes.

On the other hand, to clean the surface and to expose hydroxyl groups, a soda-lime glass was treated with a plasma generator at a rate of $1cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was placed on a flat place and dried by air for 2 minutes. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in FS-2050p-0.4 (Fluoro Technology Co., solution of 0.2-0.4 mass% trifluoropropyl trimethoxysilane in isopropyl alcohol) for 48 hours for surface modification. The soda-lime glass was collected from FS-2050p-0.4 and dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GPL103 was applied to the washed soda-lime glass and left for 1 hour. The antifouling structure of the embodiment was thus obtained.

(Example 2-6)

Into a screw-top tube A (50 cc), 0.93 g of pure water, 1.5 g of triethylene glycol, 0.78g of isopropyl alcohol and 0.3 g of sulfuric acid were sequentially charged in the written order. Into a screw-top tube B (50 cc), 8.04 g of ethyl silicate and 0.78 g of isopropyl alcohol were sequentially charged in the written order.

A stirrer and a thermocouple were set in the screw-top tube A, and the screw-top tube A was placed on a magnetic stirrer. The materials in the screw-top tube B were transferred to the screw-top tube A. The magnetic stirrer was turned on to start stirring at 1500 rpm. After the temperature measured by the thermocouple reached 35.2°C (peak temperature), the stirring was further continued for 30 minutes.

On the other hand, to clean the surface and to expose hydroxyl groups, a soda-lime glass was treated with a plasma generator at a rate of $1 cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was placed on a flat place and dried by air for 2 minutes. The air-dried soda-lime glass was dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in a mixture solution of 1 g of 1,1,1,2,2,3,3,4,4,5,5,6,6,7,7,8,8,9,9,10,10-henicosafluoro-12-(trimethoxysilyl)dodecane (Modifier A), 50 g of isopropanol and 1 g of nitric acid (0.1 N) for 48 hours for surface modification. The soda-lime glass was collected from the mixture solution and dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GPL102 was applied to the washed soda-lime glass and left for 1 hour. The antifouling structure of the embodiment was thus obtained.

(Example 2-7)

Into a screw-top tube A (50 cc), 0.6 g of triethylene glycol, 0.31 g of isopropyl alcohol and 0.2 g of sulfuric acid were sequentially charged in the written order. Into a screw-top tube B (50 cc), 4.5 g of tetraethoxysilane and 0.31 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. After the temperature measured by the thermocouple reached 43.2°C (peak temperature), the stirring was further continued for 30 minutes.

On the other hand, to clean the surface and to expose hydroxyl groups, a soda-lime glass was treated with a plasma generator at a rate of $1 cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in FLUOROSURF FG-5020 for 48 hours for surface modification.

The soda-lime glass was collected from the FLUOROSURF FG-5020 and dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GPL102 was applied to the washed soda-lime glass and left for 1 hour. The antifouling structure of the embodiment was thus obtained.

(Example 2-8)

Into a screw-top tube A (50 cc), 1.04 g of pure water, 1.5 g of triethylene glycol, 0.78g of isopropyl alcohol and 1.2 g of sulfuric acid were sequentially charged in the written order. Into a screw-top tube B (50 cc), 11.25 g of tetraethoxysilane and 0.78 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. When the temperature measured by the thermocouple reached 55.3°C (peak temperature), the stirring was stopped.

On the other hand, to clean the surface and to expose hydroxyl groups, a soda-lime glass was treated with a plasma generator at a rate of $1cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

The cooled soda-lime glass was immersed in FLUOROSURF FG-5020 for 48 hours for surface modification. The soda-lime glass collected from the FLUOROSURF FG-5020 was dried in a preheated dry oven at 150°C for 1 hour. The heat-dried soda-lime glass was allowed to cool to room temperature (25°C) in the dry oven.

The cooled soda-lime glass was put in NOVEC 7100 and washed with an ultrasonic cleaner for 5 minutes.

Thereafter, 0.011 g of KRYTOX GPL102 was applied to the washed soda-lime glass and left for 1 hour. The antifouling structure of the embodiment was thus obtained.

(Comparison 2-1)

Into a screw-top tube A (50 cc), 0.93 g of pure water, 1.5 g of triethylene glycol, 0.78g of isopropyl alcohol and 0.3 g of sulfuric acid were sequentially charged in the written order. Into a screw-top tube B (50 cc), 8.04 g of ethyl silicate and 0.78 g of isopropyl alcohol were sequentially charged in the written order.

A stirrer and a thermocouple were set in the screw-top tube A, and the screw-top tube A was placed on a magnetic stirrer. The materials in the screw-top tube B was transferred to the screw-top tube A. The magnetic stirrer was turned on to start stirring at 1500 rpm. After the temperature measured by the thermocouple reached 34.5°C (peak temperature), the stirring was further continued for 30 minutes.

On the other hand, to clean the surface and to expose hydroxyl groups, a soda-lime glass was treated with a plasma generator at a rate of $1cm^2/s$.

Then, an aliquot (5.0 g) of the solution mixed and stirred in the screw-top tube A was collected in a screw-top tube C (50 cc). Isopropyl alcohol (20 g) was put into the screw-top tube C. A stirrer was set in the screw-top tube C, and the screw-top tube C was placed on a magnetic stirrer. The magnetic stirrer was turned on, and the solution was stirred at 1500 rpm for 1 minute.

An aliquot (1.5 mL) of the solution mixed and stirred in the screw-top tube C was collected and applied to the plasma-treated soda-lime glass by spin coating with a spin coater (3 seconds at a rotation speed of 100 rpm, then 5 seconds at 500 rpm, and thereafter 15 seconds at 1000 rpm).

The spin-coated soda-lime glass was placed on a flat place and dried by air for 2 minutes. The air-dried soda-lime glass was then dried in a preheated dry oven at 150°C for 1 hour. The heat-dried soda-lime glass was allowed to cool to room temperature (25°C) in the dry oven.

The cooled soda-lime glass was further calcined in a preheated muffle furnace at 500°C for 1 hour. The calcined soda-lime glass was allowed to cool to room temperature (25°C) in the muffle furnace.

Thereafter, 0.011 g of KRYTOX GPL103 was applied to the cooled soda-lime glass and left for 1 hour. The antifouling structure of the embodiment was thus obtained. The specification of the samples is partly shown in Table 4.

Table 4

| | Antifouling Structure | | | | | | |
|---|---|---|---|---|---|---|---|
| | Surface Layer (Microporous Structure) | | | | | | |
| | Condition of Micropores (-) | Thickness (T) of Surface Layer (nm) | Depth of Fluorine Detected (nm) | t/T (-) | Average Diameter (D) of Surface Openings (nm) | All-Optic Transmittance (%) | Haze (%) |
| Example 2-1 | Porous *1 | 300 | 5 | 0.02 | 50 | 95 | 0.2 |
| Example 2-2 | Porous *1 | 250 | 5 | 0.02 | 100 | 94 | 0.3 |
| Example 2-3 | Porous *1 | 250 | 5 | 0.02 | 50 | 94 | 0.2 |
| Example 2-4 | Porous *1 | 250 | 5 | 0.02 | 50 | 94 | 0.2 |
| Example 2-5 | Porous *1 | 250 | 50 | 0.20 | 50 | 94 | 0.2 |
| Example 2-6 | Porous *1 | 250 | 5 | 0.02 | 10 | 95 | 0.1 |
| Example 2-7 | Porous *1 | 600 | 5 | 0.01 | 300 | 92 | 2.4 |
| Example 2-8 | Porous *1 | 250 | 5 | 0.02 | 200 | 94 | 1.2 |
| Comparison 2-1 | Porous *1 | 250 | - | - | 50 | 94 | 0.2 |

Table 4 (continued)

| | Antifouling Structure | | | | | | |
|---|---|---|---|---|---|---|---|
| | Surface Layer (Microporous Structure) | | | | | Fluorine-Containing Liquid | |
| | Material (-) | Alkoxysilica (-) | Surface Roughness (Ra) (nm) | Fluorine Surface Modification (-) | Surface Energy (mN/m) | Type of Fluorinated Oil (-) | Viscosity (mm²/s) |
| Example 2-1 | Silicon Oxide | Ethyl Silicate *2 | 8 | FLUOROSURF FG5020 *3 | 11 | Perfluoropolyether-based *4 | 80 |
| Example 2-2 | Silicon Oxide | Tetraethoxysilane | 8 | FLUOROSURF FG5020 *3 | 11 | Perfluoropolyether-based *5 | 16 |
| Example 2-3 | Silicon Oxide | Ethyl Silicate *2 | 5 | Trifluoropropyl trimethoxysilane | 15 | Perfluoropolyether-based *4 | 80 |
| Example 2-4 | Silicon Oxide | Ethyl Silicate *2 | 5 | FLUOROSURF FG5020 *3 | 11 | Perfluoropolyether-based *4 | 80 |
| Example 2-5 | Silicon Oxide | Ethyl Silicate *2 | 5 | FS-2050p-0.4 *6 | 12 | Perfluoropolyether-based *4 | 80 |
| Example 2-6 | Silicon Oxide | Ethyl Silicate *2 | 3 | Surface Modifier A *7 | 14 | Perfluoropolyether-based *5 | 16 |
| Example 2-7 | Silicon Oxide | Tetraethoxysilane | 50 | FLUOROSURF FG5020 *3 | 11 | Perfluoropolyether-based *5 | 16 |
| Example 2-8 | Silicon Oxide | Tetraethoxysilane | 30 | FLUOROSURF FG5020 *3 | 11 | Perfluoropolyether-based *5 | 16 |
| Comparison 2-1 | Silicon Oxide | Ethyl Silicate *2 | 5 | None | 230 | Perfluoropolyether-based *4 | 80 |

*1 Micropores are randomly and three-dimensionally arranged.
*2 Ethyl Silicate 40 (Colcoat Co., Ltd.)
*3 Solution of 0.2-2.0 mass% trifluoropropyl trimethoxysilane in Novec 7100
*4 KRYTOX GPL103
*5 KRYTOX GPL102
*6 Solution of 0.2-0.4 mass% Trifluoropropyl trimethoxysilane in isopropyl alcohol
*7 1,1,1,2,2,3,3,4,4,5,5,6,6,7,7,8,8,9,9,10,10-henicosafluoro-12-(trimethoxysilyl)dodecane

EVALUATION OF PERFORMANCE

The following performances were evaluated for the antifouling structures of the above samples.

Heat Resistance

The heat resistance of the antifouling structures of the samples was evaluated by repeating a retention test at an atmospheric temperature of 90°C for 4 hours for four times and thereafter dropwise placing 10 μL of water on the antifouling structures and measuring the sliding angle. The results are shown in Table 5. For heat resistance in Table 5, "A" denotes a sliding angle of 10° or less, "B" denotes a sliding angle of greater than 10° and equal to or less than 20°, "C" denotes a sliding angle of greater than 20° and equal to or less than 30°, and "D" denotes a sliding angle of greater than 30°. Sliding angle was measured with a contact angle meter (DROP MASTER, Kyowa Interface Science Co., Ltd.).

Transparency

The transparency of the antifouling structures of the samples was evaluated by measuring the haze value with a haze meter (Murakami Color Research Laboratory Co., Ltd.). The results are shown in Table 5. For transparency in Table 5, "A" denotes a haze value of 1% or less, "B" denotes a haze value of greater than 1% and equal to or less than 3%, and "C" denotes a haze value of greater than 3% and equal to or less than 5%, and "D" denotes a haze value of greater than 5%.

Water droplets sliding characteristic

The water droplets sliding characteristic of the antifouling structures of the samples was evaluated by dropwise placing 10 μL of water and measuring the sliding angle thereof. The results are shown in Table 5. For water droplets sliding characteristic in Table 5, "A" denotes a sliding angle of 10° or less, "B" denotes a sliding angle of greater than 10° and equal to or less than 20°, "C" denotes a sliding angle of greater than 20° and equal to or less than 30°, and "D" denotes a sliding angle of greater than 30°. Sliding angle was measured with a contact angle meter (DROP MASTER, Kyowa Interface Science Co, Ltd.).

Durability

The durability of the antifouling structures of the samples was evaluated by reciprocally sliding with canvas for 5000 times and thereafter measuring the sliding angle in the same procedure as in the evaluation of water droplets sliding characteristic. The results are shown in Table 5. For durability in Table 5, "A" denotes a sliding angle of 10° or less, "B" denotes a sliding angle of greater than 10° and equal to or less than 20°, "C" denotes a sliding angle of greater than 20° and equal to or less than 30°, and "D" denotes a sliding angle of greater than 30°. Sliding angle was measured with a contact angle meter (DROP MASTER, Kyowa Interface Science Co, Ltd.).

Table 5

| | Evaluation Result | | | |
|---|---|---|---|---|
| | Heat Resistance | Transparency | Water droplets sliding characteristic | Durability |
| Example 2-1 | A | A | A | A |
| Example 2-2 | A | A | A | A |
| Example 2-3 | C | A | B | A |
| Example 2-4 | A | A | A | A |
| Example 2-5 | A | A | A | A |
| Example 2-6 | B | A | B | A |
| Example 2-7 | C | B | C | C |
| Example 2-8 | C | B | A | C |
| Comparison 2-1 | D | B | D | D |

As seen in Table 4 and Table 5, the inventive antifouling structures of Example 2-1 to Example 2-8 have higher heat resistance than the non-inventive antifouling structure of Comparison 2-1. This is presumably because of the improvement of the retention of the fluorine-containing liquid in the antifouling structures of Example 2-1 to Example 2-8, which is achieved by the surface modification that allows elemental fluorine to be present in the surface portion of the surface layer composed of the integral microporous structure. This is also presumably because elemental fluorine is present in the surface portion of the microporous structure in the area from the surface of the surface layer to a depth of T/50.

As seen in Table 4 and Table 5, the antifouling structures of Example 2-1 to Example 2-8 have high transparency, good water droplets sliding characteristic and high durability. The durability is high presumably also because silicon oxide is the material of the microporous structure.

Further, as seen in Table 4 and Table 5, the antifouling structures of Example 2-1, Example 2-2 and Example 2-4 to Example 2-6 have higher heat resistance presumably also because the thickness of the surface layer ranges from 50 nm to 1000 nm and the microporous structure that is surface-modified with a perfluoropolyether-based fluorine-based surface modifier and that has surface openings with an average diameter (D) ranging from 10 nm to 100 nm is combined with a perfluoropolyether-based fluorinated oil.

While the present invention is described with some embodiments and examples, the present invention is not limited thereto, and a variety of modifications can be made within the scope and spirit of the present invention.

For example, automobile parts are given as an example application of the antifouling structures in the above-described embodiments. However, the present invention is not limited thereto but also applicable to, for example, motorcycle parts, mobile devices such as cellphones and electronic organizers, signs, timepieces and the like.

REFERENCE SIGNS LIST

1, 2, 3, 4 Antifouling structure
1', 2' Precursor of antifouling structure
10 Surface layer (fluorine-containing surface layer)
10A Surface portion
10a Surface
11 Microporous structure
11A Surface portion
11a Micropore
20 Fluorine-containing liquid
30 Base
40 Application liquid
41 Polymerizable organometallic compound
42 Organometallic compound having fluorine functional group
42A Fluorine functional group
42B Organometallic compound having fluorine functional group other than fluorine functional group
43 Acid (or basic) catalyst
44 Dispersion medium
50 Coating layer
W Water droplet

**Claims**

1. An antifouling structure, comprising:

   a base;
   a surface layer that is formed on a surface of the base and comprises a microporous structure with micropores; and
   a fluorine-containing liquid retained in the micropores of the microporous structure,
   wherein elemental fluorine is present in a surface of the microporous structure,
   wherein an average diameter of surface openings of the micropores in the microporous structure ranges from 10 nm to 500 nm, and
   wherein a thickness of the surface layer ranges from 100 to 1000 nm.

2. The antifouling structure according to claim 1, wherein the elemental fluorine is present as a fluorine functional group.

3.  The antifouling structure according to claim 1 or 2, wherein the average diameter of the surface openings ranges from 10 nm to 100 nm.

4.  The antifouling structure according to any one of claims 1 to 3, wherein the elemental fluorine is present in the surface of the microporous structure in an area from a surface of the surface layer to a depth of at least T/50, where T is a thickness of the surface layer.

5.  The antifouling structure according to any one of claims 1 to 4, wherein the elemental fluorine is present in the surface of the microporous structure in an area from a surface of the surface layer to a depth of at least T/2, where T is a thickness of the surface layer.

6.  The antifouling structure according to any one of claims 1 to 5, wherein the elemental fluorine is present in the surface of the microporous structure from a surface of the surface layer to a depth of at least 4T/5, where T is a thickness of the surface layer.

7.  The antifouling structure according to any one of claims 1 to 6, wherein an all-optical transmittance is equal to or greater than 70%, and a haze value is equal to or less than 1%.

8.  The antifouling structure according to any one of claims 1 to 7, wherein the microporous structure satisfies a condition of the following Expression 1,

$$10 \text{ (nm)} \leqq D \text{ (nm)} \leqq 400 \text{ (nm)}/n \text{ (1)},$$

in which D is the average diameter of the surface openings, and n is a refractive index of a material of the surface layer.

9.  The antifouling structure according to any one of claims 1 to 8, wherein an evaporation loss of the fluorine-containing liquid after retention at 120°C for 24 hours is less than 35 mass%.

10. The antifouling structure according to any one of claims 1 to 9, wherein a viscosity at 0°C of the fluorine-containing liquid is equal to or less than 160 mm$^2$/s.

11. The antifouling structure according to any one of claims 1 to 10, wherein the surface layer is made of an inorganic material containing silicon oxide.

12. A method for producing an antifouling structure that comprises: a base; a surface layer that is formed on a surface of the base and comprises a microporous structure with micropores; and a fluorine-containing liquid retained in the micropores of the microporous structure, wherein elemental fluorine is present in a surface of the microporous structure, and an average diameter of surface openings of the micropores in the microporous structure ranges from 10 nm to 500 nm, and a thickness of the surface layer ranges from 100 to 1000 nm , the method comprising:

forming the surface layer on the surface of the base, in which the surface layer has a thickness ranging from 100 to 1000 nm and which comprises the microporous structure with the micropores having an average diameter of the surface openings ranging from 10 nm to 500 nm, and the elemental fluorine is present in the surface of the microporous structure,
wherein the step of forming the surface layer having a thickness ranging from 100 to 1000 nm comprises: applying an application liquid containing a polymerizable organometallic compound, an organometallic compound having a fluorine functional group and an acid or
basic catalyst to the base; then heating the base at 20°C to 200°C to precure the application liquid; and thereafter heating the base at 300°C to 500°C.

13. The method for producing the antifouling structure according to claim 12, further comprising: subjecting the surface layer to a surface modification with an organometallic compound having a fluorine functional group.

14. The method for producing the antifouling structure according to claim 12 or 13, wherein the polymerizable organometallic compound is at least one of an alkoxysilane monomer and an alkoxysilane oligomer.

**15.** An automobile part comprising the antifouling structure of any one of claims 1 to 11.

**16.** A precursor component for an antifouling structure, comprising:

a base; and
a surface layer that is formed on a surface of the base which has a thickness ranging from 100 to 1000 nm and comprises a microporous structure with micropores,
wherein elemental fluorine is present in a surface of the microporous structure, and
an average diameter of surface openings of the micropores in the microporous structure ranges from 10 nm to 500 nm.

**Patentansprüche**

**1.** Antifouling-Struktur, umfassend:

eine Basis;
eine Oberflächenschicht, die auf einer Oberfläche der Basis ausgebildet ist und eine mikroporöse Struktur mit Mikroporen aufweist; und
eine fluorhaltige Flüssigkeit, die in den Mikroporen der mikroporösen Struktur zurückgehalten wird,

wobei elementares Fluor in einer Oberfläche der mikroporösen Struktur vorhanden ist,
wobei ein durchschnittlicher Durchmesser von Oberflächenöffnungen der Mikroporen in der mikroporösen Struktur im Bereich von 10 nm bis 500 nm liegt, und wobei eine Dicke der Oberflächenschicht im Bereich von 100 bis 1000 nm liegt.

**2.** Antifouling-Struktur nach Anspruch 1, wobei das elementare Fluor als funktionelle Fluorgruppe vorliegt.

**3.** Antifouling-Struktur nach Anspruch 1 oder 2, wobei der durchschnittliche Durchmesser der Oberflächenöffnungen im Bereich von 10 nm bis 100 nm liegt.

**4.** Antifouling-Struktur nach einem der Ansprüche 1 bis 3, wobei das elementare Fluor in der Oberfläche der mikroporösen Struktur in einem Bereich von einer Oberfläche der Oberflächenschicht bis zu einer Tiefe von mindestens T/50 vorhanden ist, wobei T eine Dicke der Oberflächenschicht ist.

**5.** Antifouling-Struktur nach einem der Ansprüche 1 bis 4, wobei das elementare Fluor in der Oberfläche der mikroporösen Struktur in einem Bereich von einer Oberfläche der Oberflächenschicht bis zu einer Tiefe von mindestens T/2 vorhanden ist, wobei T eine Dicke der Oberflächenschicht ist.

**6.** Antifouling-Struktur nach einem der Ansprüche 1 bis 5, wobei das elementare Fluor in der Oberfläche der mikroporösen Struktur von einer Oberfläche der Oberflächenschicht bis zu einer Tiefe von mindestens 4 T/5 vorhanden ist, wobei T eine Dicke der Oberflächenschicht ist.

**7.** Antifouling-Struktur nach einem der Ansprüche 1 bis 6, wobei eine rein optische Durchlässigkeit gleich oder größer als 70% ist, und ein Trübungswert gleich oder kleiner als 1% ist.

**8.** Antifouling-Struktur nach einem der Ansprüche 1 bis 7, wobei die mikroporöse Struktur eine Bedingung des folgenden Ausdrucks 1 erfüllt,

$$10 \ (nm) \leq D \ (nm) \leq 400 \ (nm) \ / \ n \ (1),$$

worin D der durchschnittliche Durchmesser der Oberflächenöffnungen und n ein Brechungsindex eines Materials der Oberflächenschicht ist.

**9.** Antifouling-Struktur nach einem der Ansprüche 1 bis 8, wobei ein Verdampfungsverlust der fluorhaltigen Flüssigkeit nach 24-stündiger Zurückhaltung bei 120 °C weniger als 35 Massen-% beträgt.

**10.** Antifouling-Struktur nach einem der Ansprüche 1 bis 9, wobei eine Viskosität der fluorhaltigen Flüssigkeit bei 0 °C gleich oder kleiner als 160 mm$^2$/s ist.

**11.** Antifouling-Struktur nach einem der Ansprüche 1 bis 10, wobei die Oberflächenschicht aus einem anorganischen Material hergestellt ist, das Siliziumoxid enthält.

**12.** Verfahren zur Herstellung einer Antifouling-Struktur, umfassend: eine Basis; eine Oberflächenschicht, die auf einer Oberfläche der Basis ausgebildet ist und eine mikroporöse Struktur mit Mikroporen aufweist; und eine fluorhaltige Flüssigkeit, die in den Mikroporen der mikroporösen Struktur zurückgehalten wird, wobei elementares Fluor in einer Oberfläche der mikroporösen Struktur vorhanden ist, und ein durchschnittlicher Durchmesser von Oberflächenöffnungen der Mikroporen in der mikroporösen Struktur im Bereich von 10 nm bis 500 nm liegt, und eine Dicke der Oberflächenschicht im Bereich von 100 bis 1000 nm liegt, wobei das Verfahren umfasst: Ausbilden der Oberflächenschicht auf der Oberfläche der Basis, in welcher die Oberflächenschicht eine Dicke im Bereich von 100 bis 1000 nm hat und welche die mikroporöse Struktur mit den Mikroporen aufweist, die einen durchschnittlichen Durchmesser der Oberflächenöffnungen im Bereich von 10 nm bis 500 nm haben, und wobei das elementare Fluor in der Oberfläche der mikroporösen Struktur vorhanden ist, wobei der Schritt des Ausbildens der Oberflächenschicht mit einer Dicke im Bereich von 100 bis 1000 nm umfasst: Aufbringen einer Auftragsflüssigkeit, die eine polymerisierbare metallorganische Verbindung, eine metallorganische Verbindung mit einer funktionellen Fluorgruppe und einen sauren oder basischen Katalysator enthält, auf die Basis; dann Erwärmen der Basis bei 20 °C bis 200 °C, um die Auftragsflüssigkeit vorzuhärten; und danach Erwärmen der Basis bei 300 °C bis 500 °C.

**13.** Verfahren zur Herstellung der Antifouling-Struktur nach Anspruch 12, welches ferner umfasst, dass die Oberflächenschicht mit einer metallorganischen Verbindung mit einer funktionellen Fluorgruppe oberflächenmodifiziert wird.

**14.** Verfahren zur Herstellung der Antifouling-Struktur nach Anspruch 12 oder 13, wobei die polymerisierbare metallorganische Verbindung ein Alkoxysilanmonomer und/oder ein Alkoxysilanoligomer ist.

**15.** Kraftfahrzeugteil, das die Antifouling-Struktur nach einem der Ansprüche 1 bis 11 aufweist.

**16.** Vorläuferkomponente für eine Antifouling-Struktur, umfassend:

eine Basis; und
eine Oberflächenschicht, die auf einer Oberfläche der Basis ausgebildet ist, die eine Dicke im Bereich von 100 bis 1000 nm hat und eine mikroporöse Struktur mit Mikroporen aufweist,
wobei elementares Fluor in einer Oberfläche der mikroporösen Struktur vorliegt, und
ein durchschnittlicher Durchmesser von Oberflächenöffnungen der Mikroporen in der mikroporösen Struktur im Bereich von 10 nm bis 500 nm liegt.

**Revendications**

**1.** Structure antisalissure, comprenant :

une base ;
une couche de surface qui est formée sur une surface de la base et comprend une structure microporeuse avec des micropores ; et
un liquide contenant du fluor retenu dans les micropores de la structure microporeuse,
dans laquelle du fluor élémentaire est présent dans une surface de la structure microporeuse,
dans laquelle le diamètre moyen des ouvertures de surface des micropores dans la structure microporeuse se trouve dans la plage allant de 10 nm à 500 nm, et
dans laquelle l'épaisseur de la couche de surface se trouve dans la plage allant de 100 à 1000 nm.

**2.** Structure antisalissure selon la revendication 1, dans laquelle le fluor élémentaire est présent en tant que groupe fonctionnel fluoré.

**3.** Structure antisalissure selon la revendication 1 ou 2, dans laquelle le diamètre moyen des ouvertures de surface se trouve dans la plage allant de 10 nm à 100 nm.

4. Structure antisalissure selon l'une quelconque des revendications 1 à 3, dans laquelle le fluor élémentaire est présent dans la surface de la structure microporeuse dans une zone allant d'une surface de la couche de surface jusqu'à une profondeur d'au moins T/50, où T est l'épaisseur de la couche de surface.

5. Structure antisalissure selon l'une quelconque des revendications 1 à 4, dans laquelle le fluor élémentaire est présent dans la surface de la structure microporeuse dans une zone allant d'une surface de la couche de surface jusqu'à une profondeur d'au moins T/2, où T est l'épaisseur de la couche de surface.

6. Structure antisalissure selon l'une quelconque des revendications 1 à 5, dans laquelle le fluor élémentaire est présent dans la surface de la structure microporeuse à partir d'une surface de la couche de surface jusqu'à une profondeur d'au moins 4T/5, où T est l'épaisseur de la couche de surface.

7. Structure antisalissure selon l'une quelconque des revendications 1 à 6, dans laquelle une transmittance tout optique est supérieure ou égale à 70% et une valeur de trouble est inférieure ou égale à 1%.

8. Structure antisalissure selon l'une quelconque des revendications 1 à 7, dans laquelle la structure microporeuse satisfait une condition de l'Expression 1 suivante,

$$10 \ (nm) \leqq \ D \ (nm) \leqq \ 400 \ (nm)/n \ (1),$$

dans laquelle D est le diamètre moyen des ouvertures de surface et n est un indice de réfraction d'un matériau de la couche de surface.

9. Structure antisalissure selon l'une quelconque des revendications 1 à 8, dans laquelle une perte par évaporation du liquide contenant du fluor après rétention à 120°C pendant 24 heures est inférieure à 35% en masse.

10. Structure antisalissure selon l'une quelconque des revendications 1 à 9, dans laquelle la viscosité à 0°C du liquide contenant du fluor est inférieure ou égale à 160 mm$^2$/s.

11. Structure antisalissure selon l'une quelconque des revendications 1 à 10, dans laquelle la couche de surface est réalisée en un matériau inorganique contenant de l'oxyde de silicium.

12. Procédé de production d'une structure antisalissure qui comprend :
une base ; une couche de surface qui est formée sur une surface de la base et comprend une structure microporeuse avec des micropores ; et un liquide contenant du fluor retenu dans les micropores de la structure microporeuse, où du fluor élémentaire est présent dans une surface de la structure microporeuse, et le diamètre moyen d'ouvertures de surface des micropores dans la structure microporeuse se trouve dans la plage allant de 10 nm à 500 nm et l'épaisseur de la couche de surface se trouve dans la plage allant de 100 à 1000 nm, le procédé comprenant le fait :

de former la couche de surface sur la surface de la base, où la couche de surface a une épaisseur se trouvant dans la plage allant de 100 à 1000 nm et comprend la structure microporeuse avec les micropores ayant un diamètre moyen des ouvertures de surface se trouvant dans la plage allant de 10 nm à 500 nm, et le fluor élémentaire est présent dans la surface de la structure microporeuse,
dans lequel l'étape de formation de la couche de surface ayant une épaisseur se trouvant dans la plage allant de 100 à 1000 nm comprend le fait : d'appliquer un liquide d'application contenant un composé organométallique polymérisable, un composé organométallique ayant un groupe fonctionnel fluoré et un catalyseur acide ou basique à la base ; puis de chauffer la base entre 20°C et 200°C pour pré-durcir le liquide d'application ; et ensuite de chauffer la base entre 300°C et 500°C.

13. Procédé de production de la structure antisalissure selon la revendication 12, comprenant en outre le fait : de soumettre la couche de surface à une modification de surface avec un composé organométallique ayant un groupe fonctionnel fluoré.

14. Procédé de production de la structure antisalissure selon la revendication 12 ou 13, dans lequel le composé organométallique polymérisable est au moins un monomère alcoxysilane et un oligomère alcoxysilane.

**15.** Pièce automobile comprenant la structure antisalissure de l'une quelconque des revendications 1 à 11.

**16.** Composant précurseur pour une structure antisalissure, comprenant :

une base ; et
une couche de surface qui est formée sur une surface de la base qui a une épaisseur se trouvant dans la plage allant de 100 à 1000 nm et comprend une structure microporeuse avec des micropores,
dans lequel du fluor élémentaire est présent dans une surface de la structure microporeuse, et
un diamètre moyen des ouvertures de surface des micropores dans la structure microporeuse se trouve dans la plage allant de 10 nm à 500 nm.

FIG. 1

# FIG. 2

FIG. 3

FIG. 4

*FIG. 5*

FIG. 6

*FIG. 7*

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2014509959 A